(19) Europäisches Patentamt
European Patent Office
Office européen des brevets

(11) **EP 2 723 082 A2**

(12) **EUROPEAN PATENT APPLICATION**

(43) Date of publication:
**23.04.2014 Bulletin 2014/17**

(51) Int Cl.:
*H04N 19/14* (2014.01)  *H04N 19/18* (2014.01)
*H04N 19/12* (2014.01)  *H04N 19/107* (2014.01)
*H04N 19/137* (2014.01)  *H04N 19/176* (2014.01)
*H04N 19/149* (2014.01)  *H04N 19/124* (2014.01)
*H04N 19/11* (2014.01)  *H04N 19/593* (2014.01)

(21) Application number: **13188633.5**

(22) Date of filing: **15.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority:  **16.10.2012   JP 2012229242**

(71) Applicant: **CANON KABUSHIKI KAISHA
Ohta-ku
Tokyo 146-8501 (JP)**

(72) Inventor: **Hattori, Hideaki
Ohta-ku, Tokyo (JP)**

(74) Representative: **Northway, Daniel Robert
Canon Europe Ltd
European Patent Department
3 The Square
Stockley Park
Uxbridge, Middlesex UB11 1ET (GB)**

(54) **Image encoding apparatus and image encoding method**

(57)    An image analyzer divides an input image into first blocks in a coding unit and generates analysis information associated with intra-frame prediction of the input image for each first block. An intra-frame predictor divides the input image into second blocks in a predictive unit, and performs the intra-frame prediction to generate the prediction residual of each second block. A CODEC encodes a DC component or the prediction residual of the second block. An encoding controller estimates, for each first block, the coding result of the CODEC based on the analysis information and controls the intra-frame predictor and the CODEC based on the estimation.

F I G.  1

EP 2 723 082 A2

**Description**

BACKGROUND OF THE INVENTION

Field of the Invention

The present invention relates to an image encoding apparatus and an image encoding method for coding a moving image.

Description of the Related Art

The development of digital technologies has popularized digital moving image capturing using a digital camera or a digital video camera. A digital moving image is generally compressed (coded) for efficient recording in a recording medium represented by a semiconductor memory. H.264/MPEG-4 AVC (to be referred to as "H.264" hereinafter) is widely used as a moving image encoding method.

International standardization activities for a more efficient encoding method succeeding to H.264 have recently started, and JCT-VC (Joint Collaborative Team on Video Coding) has been established between ISO/IEC and ITU-T. JCT-VC is promoting standardization of High Efficiency Video Coding (HEVC).

To improve the coding efficiency, H.264 and HEVC employ intra-frame prediction coding for performing intra-frame prediction using correlation between pixels in a frame as well as conventionally used inter-frame prediction coding using motion prediction based on motion vectors.

There is also known an adaptive quantization control technique of extracting image characteristic information and adaptively changing quantization parameters in a frame to improve subjective image quality under circumstances where the bit rate of a compressed video is limited.

In H.264, there exist three types of prediction block sizes that are the units of intra-frame prediction. Each prediction block size has nine prediction modes at maximum. In HEVC, the number of selectable prediction modes and the number of prediction block sizes in intra-frame prediction increase as compared to H.264. That is, at the time of coding, it is necessary to search for and decide the prediction block size and the prediction mode to be used for coding among many prediction modes.

In the image encoding apparatus that codes a video in real time, however, if a prediction mode and a prediction block size are searched for comprehensively among a number of candidates, the power consumption increases. In addition, when the above-described processing of extracting image characteristic information in the image encoding apparatus, the power consumption increases in general.

Japanese Patent Laid-Open No. 2008-154060 discloses a technique of evaluating the prediction residual after intra-frame prediction or motion prediction and, if the statistic of the prediction residual is equal to or smaller than a threshold, omitting orthogonal transformation processing to reduce the power consumption. In the technique disclosed in this related art, however, since processes that can be omitted are limited to orthogonal transformation processing and quantization processing, it is impossible to reduce power consumed by intra-frame prediction and motion prediction using motion vector search with large power consumption. Additionally, the technique disclosed in the related art cannot reduce power consumed by extraction of image characteristic information.

SUMMARY OF THE INVENTION

The present invention in its first aspect provides an image processing apparatus as specified in claims 1 to 14.

The present invention in its second aspect provides an image processing method as specified in claim 15.

According to these aspects, it is possible to reduce power consumption of an image encoding apparatus.

Further features of the present invention will become apparent from the following description of exemplary embodiments with reference to the attached drawings.

BRIEF DESCRIPTION OF THE DRAWINGS

Fig. 1 is a block diagram for explaining the arrangement of an image encoding apparatus according to the first embodiment.

Fig. 2 is a block diagram for explaining the arrangement of a CODEC.

Fig. 3 is a block diagram for explaining the detailed arrangement of an image analyzer.

Fig. 4 is a view for explaining simple intra-frame prediction for each block of 16 × 16 pixels.

Figs. 5A to 5C are views showing examples of prediction modes supported by an intra-frame predictor.

Fig. 6 is a view showing a block of 16 × 16 pixels which is divided into 16 sub blocks each including 4 × 4 pixels and the indices of the sub blocks.

Fig. 7 is a timing chart for explaining intra-frame prediction by the intra-frame predictor and the intra-frame compensator of an input frame transferred to an encoding controller.

Fig. 8 is a view showing an algorithm of increasing/decreasing a default quantization parameter given to each image in accordance with analysis information obtained from the prediction residual in a DC prediction mode.

Fig. 9 is a view showing an algorithm of estimating a coding result.

Figs. 10A to 10C are flowcharts for explaining coding processing of an image analyzer and an encoder.

Fig. 11 is a flowchart for prediction coding and local decoding of a sub block.

Figs. 12A to 12C are views for explaining block size enlargement.

Fig. 13 is a view showing a reference pixel group generated by filter processing in the DC prediction mode of HEVC.

Fig. 14 is a block diagram showing the detailed arrangement of an image analyzer according to the third embodiment.

Fig. 15 is a block diagram for explaining the arrangement of an image encoding apparatus according to the fourth embodiment.

Figs. 16A to 16D are flowcharts for explaining coding processing of an image analyzer and an encoder.

Fig. 17 is a flowchart for explaining inter-frame prediction coding.

DESCRIPTION OF THE EMBODIMENTS

An image encoding apparatus and an image encoding method according to each embodiment of the present invention will now be described in detail with reference to the accompanying drawings. Note that an example will be explained below in which coding is performed for each block including $16 \times 16$ pixels, that is, 16 pixels in the horizontal direction and 16 pixels in the vertical direction. In addition, an example will be described in which an input image is coded by intra-frame prediction coding using intra-frame prediction.

First Embodiment

[Arrangement of Apparatus]

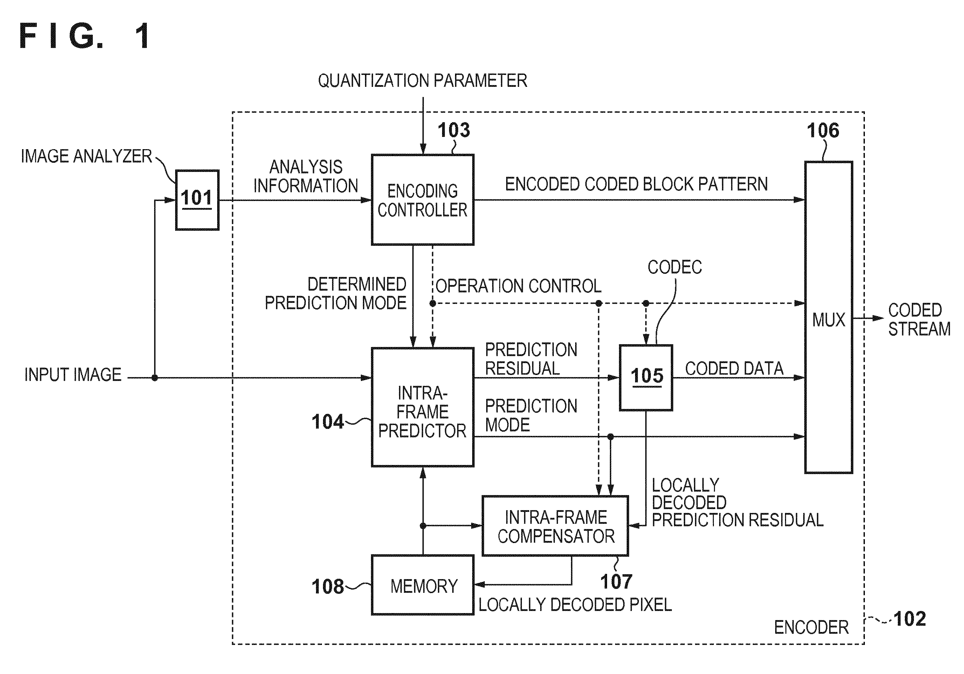

The arrangement of an image encoding apparatus according to the first embodiment will be described with reference to the block diagram of Fig. 1. The image encoding apparatus includes an image analyzer 101 and an encoder 102, as shown in Fig. 1.

In the encoder 102, an encoding controller 103 receives a default quantization parameter for a coding target frame (frame image) from outside of the apparatus before the start of coding processing. The default quantization parameter is decided outside the apparatus based on a target code amount and a generated code amount that is the result of coding up to the immediately preceding frame. The encoding controller 103 performs adaptive quantization control to be described later using the default quantization parameter as a reference, and transfers a quantization parameter to be used in actual quantization to an encoder/decoder (CODEC) 105.

The encoding controller 103 also controls to, for example, set parameters of an intra-frame predictor 104, the CODEC 105, a multiplexer (MUX) 106, and an intra-frame compensator 107, which perform internal processing of the encoder 102, and instruct the start of an operation. The encoding controller 103 also performs coding result estimation, coded block pattern generation, and entropy encoding of the coded block pattern to be described later.

When coding processing starts, the intra-frame predictor 104 receives the coding target frame (frame image), divides the input frame into image blocks (prediction target blocks/second blocks) each having a predetermined block size of $4 \times 4$ pixels (prediction unit), and searches for a prediction mode for each prediction target block. The intra-frame predictor 104 reads out the decoded pixels of an adjacent block from a memory 108 for intra-frame prediction. The intra-frame predictor 104 generates a reference block that is a reference pixel group corresponding to the prediction mode of the search target, calculates the prediction residual (difference value) between the prediction target block and the reference block, and calculates the evaluation value of the prediction residual.

To calculate the evaluation value, a SAD (sum of absolute difference) that is a value obtained by totaling prediction residuals expressed as absolute values in the prediction target block, or an activity to be described later is used. The intra-frame predictor 104 decides a prediction mode that minimizes the evaluation value as a prediction mode of the minimum generated code amount. The intra-frame predictor 104 outputs information representing the decided prediction mode to the MUX 106 and the intra-frame compensator 107, and outputs the prediction residual to be generated using the prediction mode to the CODEC 105.

The CODEC 105 performs coding processing and local decoding processing of the prediction residual output from the intra-frame predictor 104. Note that although details will be described later, "prediction residual coding" is performed by orthogonal transformation of the prediction residual → quantization → entropy coding, and "local decoding" is performed by inverse quantization of the quantized value → inverse orthogonal transformation.

The MUX 106 outputs a coded stream in which the coded data output from the CODEC 105, the prediction mode output from the intra-frame predictor 104, and the entropy-encoded block pattern output from the encoding controller 103 are multiplexed.

The intra-frame compensator 107 adds (compensates) a reference pixel value corresponding to the prediction mode to a prediction residual (to be referred to as a "decoded prediction residual" hereinafter) locally decoded by the CODEC 105, and records the pixel that has undergone the local decoding (to be referred to as a "locally decoded pixel" hereinafter) in the memory 108 for intra-frame prediction. The locally decoded pixel recorded in the memory 108 is used to generate a reference block to be used for intra-frame prediction of the subsequent block.

•Prediction Residual Encoder/Local Decoder

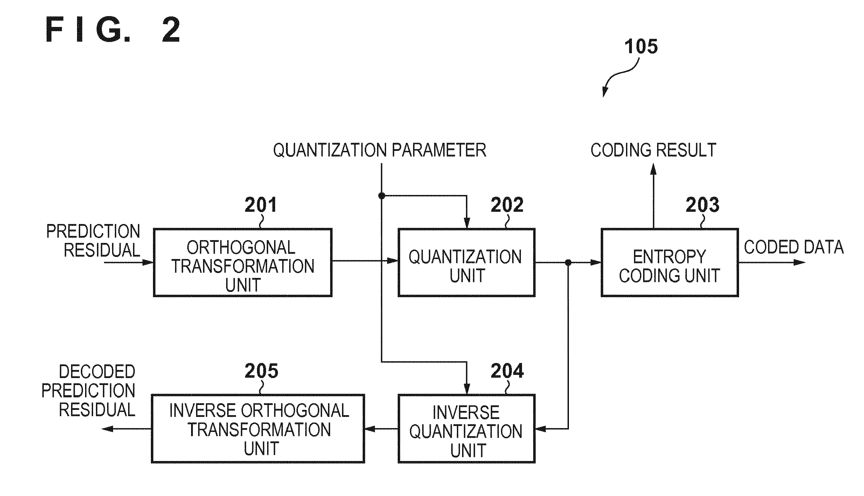

The arrangement of the CODEC 105 will be described with reference to the block diagram of Fig. 2.

Referring to Fig. 2, an orthogonal transformation unit 201 orthogonally transforms a prediction residual for each transformation block having a predetermined transformation block size of $4 \times 4$ pixels, and outputs an orthogonal transformation coefficient to a quantization unit 202. The quantization unit 202 quantizes the orthogonal transformation coefficient based on a quantization parameter input from the encoding controller 103, and outputs the quantized orthogonal transformation coefficient (to be referred to as a "quantized value" hereinafter) to an entropy coding unit 203.

The entropy coding unit 203 outputs coded data obtained by entropy-encoding the quantized value to the MUX 106, and transfers a coding result representing whether all quantized values in a transformation block are zero or not to the encoding controller 103 for each transformation block.

A coding result representing that all quantized values in a transformation block size are zero will be defined as "Not Coded", and a coding result representing that at least one quantized value is not zero will be defined as "Coded" hereinafter. In addition, information representing coding results of transformation blocks or sub blocks to be described later, which are integrated for each $16 \times 16$ pixel block, will be defined as a "coded block pattern".

A transformation block whose coding result is "Not Coded" can be decoded using only a coded block pattern to be described later. Hence, the entropy coding unit 203 does not output the coded data of the prediction residual of the transformation block to the MUX 106.

Note that in certain embodiments the coding result can be defined only for all alternating current component coefficients (to be referred to as "AC coefficients" hereinafter), excluding a direct current component coefficient (to be referred to as "DC coefficient" hereinafter) in a transformation block. When the coding result is defined only for the AC coefficients, the DC coefficient may be entropy-encoded to generate coded data even when "Not Coded". In the following description, the coding result is assumed to be defined for an AC coefficient.

An inverse quantization unit 204 inversely quantizes the quantized value, and outputs an orthogonal transformation coefficient obtained by inverse quantization to an inverse orthogonal transformation unit 205. The inverse orthogonal transformation unit 205 outputs a decoded prediction residual obtained by inverse orthogonal transformation of the orthogonal transformation coefficient to the intra-frame compensator 107 for each transformation block.

•Image Analyzer

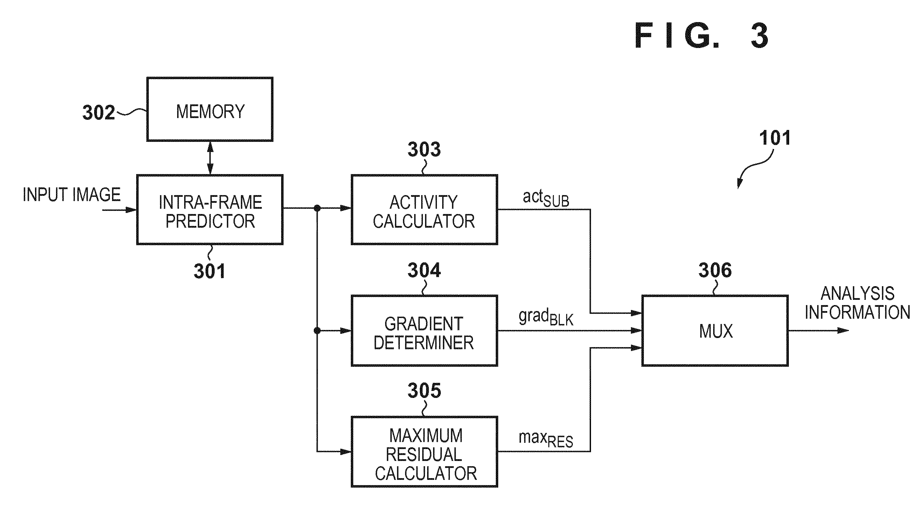

As described above, intra-frame prediction and prediction residual coding include many processes and consume much power. In the first embodiment, to solve this problem, analysis information calculated by the image analyzer 101 shown in Fig. 1 is used to reduce the power consumption of intra-frame prediction and prediction residual coding. The detailed arrangement of the image analyzer 101 will be described with reference to the block diagram of Fig. 3.

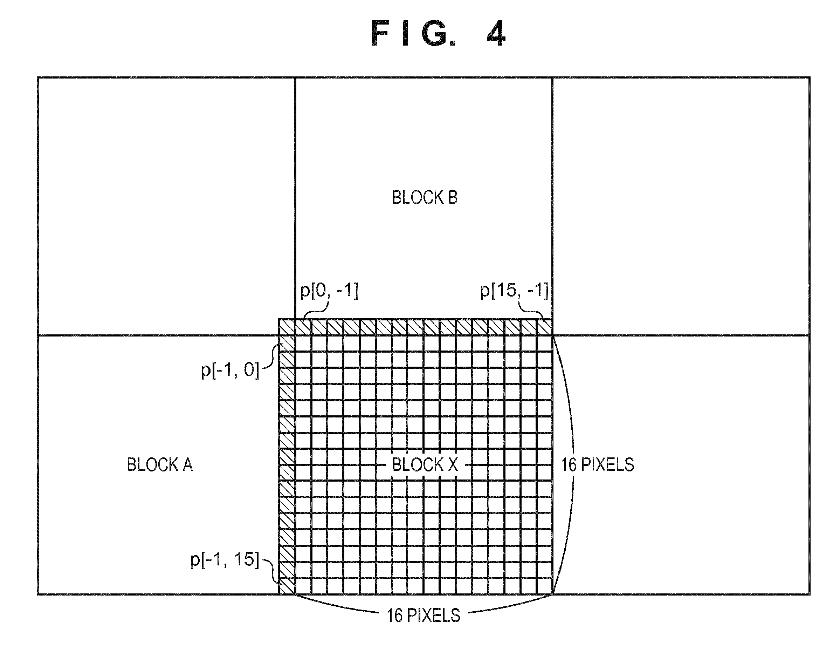

An intra-frame predictor 301 divides an input frame into image blocks (first blocks) each having a coding unit of $16 \times 16$ pixels and performs simple intra-frame prediction. That is, the intra-frame predictor 301 has only prediction modes that are smaller in number than the prediction modes provided in the intra-frame predictor 104 and do not need a multiplier to generate a reference block. The simple intra-frame prediction for each block of $16 \times 16$ pixels will be explained with reference to Fig. 4.

The intra-frame predictor 301 generates a reference block to be used for intra-frame prediction of a prediction target image block X from locally decoded pixels p[-1, 0] to p[-1, 15] at the right edge of a block A and locally decoded pixels p[0, -1] to p[15, -1] at the lower edge of a block B.

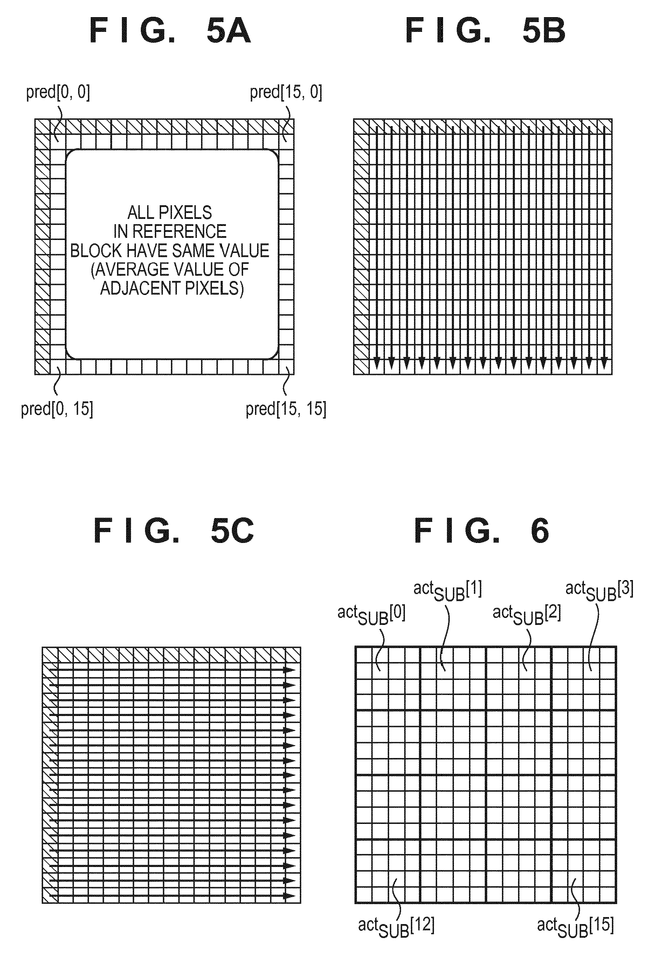

Figs. 5A to 5C show examples of prediction modes supported by the intra-frame predictor 301. Note that the intra-frame predictor 301 need only support at least one of the prediction modes shown in Figs. 5A to 5C. Fig. 5A shows a direct current prediction mode (to be referred to as a "DC prediction mode" hereinafter) in which a reference block is generated using the locally decoded pixels of the blocks A and B shown in Fig. 4 in accordance with

$$\mathtt{pred[x,\ y]\ =\ (\Sigma_{y}p[-1,\ y]\ +\ \Sigma_{x}p[x,\ -1]\ +\ 16)/32}$$

$$\mathtt{...(1)}$$

where x ($0 \leq x \leq 15$) is a variable representing a horizontal position in the $16 \times 16$ pixel block,
y ($0 \leq y \leq 15$) is a variable representing a vertical position in the $16 \times 16$ pixel block, and

pred[x, y] is the value of a pixel in the 16 × 16 pixel reference block.

Fig. 5B shows a vertical prediction mode in which a reference block is generated using the locally decoded pixels of the block B in accordance with

$$\text{pred[x, y] = p[x, -1]} \qquad \qquad \ldots(2)$$

Fig. 5C shows a horizontal prediction mode in which a reference block is generated using the locally decoded pixels of the block A in accordance with

$$\text{pred[x, y] = p[-1, y]} \qquad \qquad \ldots(3)$$

The intra-frame predictor 301 records the pixels at the right and lower edges of the image block in which the intra-frame prediction is completed in a memory 302 for intra-frame prediction to generate a reference block for intra-frame prediction of a subsequent image block. The intra-frame predictor 301 calculates the prediction residual (difference) between the image block and the reference block as a prediction residual block, and transfers the prediction residual block to an activity calculator 303, a gradient determiner 304, and a maximum residual calculator 305.
The activity calculator 303 divides a prediction residual block $e[x, y]$ into prediction residual sub blocks $e_{SUB}[i, x, y]$ each including 4 × 4 pixels, and calculates an activity $act_{SUB}[i]$ for each sub block. An index $i$ ($1 \leq i \leq 15$) indicates each sub block in the prediction residual block. Fig. 6 shows a block of 16 × 16 pixels which is divided into 16 sub blocks each including 4 × 4 pixels and the indices of the sub blocks.
The activity calculator 303 calculates $act_{AVE}[i]$ that is the average value of the prediction residuals in the sub blocks. The absolute difference values between the calculated average value $act_{AVE}[i]$ and the prediction residuals $e_{SUB}[i, x, y]$ are totaled in the sub blocks, and the sum is defined as the activity $act_{SUB}[i]$ of the sub block, which is given by

$$\text{act}_{SUB}[i] = \Sigma_i\Sigma_x\Sigma_y\text{abs}(e_{SUB}[i, x, y] - \text{act}_{AVE}[i])$$

$$\ldots(4)$$

where $0 \leq i \leq 15$,
$0 \leq x \leq 3$,
$0 \leq y \leq 3$, and
abs() is a function for obtaining an absolute value.

The gradient determiner 304 calculates gradient information $grad_{BLK}$ for each prediction residual block of 16 × 16 pixels without dividing it into sub blocks. Equation (5) is used to calculate a gradient $grad_V$ in the vertical direction. A result obtained by totaling the difference absolute values between the values of the pixels at the upper edge of the prediction residual block and the values of the pixels at the lower edge in the block is the gradient $grad_V$ in the vertical direction.

$$\text{grad}_V = \Sigma_x\text{abs}(e[x, 15] - e[x, 0]) \qquad \ldots(5)$$

where $0 \leq x \leq 15$
Equation (6) is used to calculate a gradient $grad_H$ in the horizontal direction. A result obtained by totaling the difference absolute values between the values of the pixels at the left edge of the prediction residual block and the values of the pixels at the right edge in the block is the gradient $grad_H$ in the horizontal direction.

$$\text{grad}_H = \Sigma_y\text{abs}(e[15, y] - e[0, y]) \qquad \ldots(6)$$

where $0 \leq y \leq 15$

After calculating the gradient $\text{grad}_V$ in the vertical direction and the gradient $\text{grad}_H$ in the horizontal direction, the gradient determiner 304 compares them and outputs a larger one of the values as the gradient value $\text{grad}_{BLK}$ of the prediction residual block.

$$\text{grad}_{BLK} = \max(\text{grad}_V, \text{grad}_H) \qquad\qquad \ldots(7)$$

where max() is a function for outputting the larger value.

The maximum residual calculator 305 divides the prediction residual block of $16 \times 16$ pixels into sub blocks each including $4 \times 4$ pixels, and outputs the maximum absolute value of the prediction residuals in the sub blocks as a maximum residual $\max_{RES}[i]$.

An MUX 306 time-divisionally multiplexes the activity information $\text{act}_{SUB}[i]$, the gradient information $\text{grad}_{BLK}$, and the maximum residual $\max_{RES}[i]$. The activity information $\text{act}_{SUB}[i]$, the gradient information $\text{grad}_{BLK}$, and the maximum residual $\max_{RES}[i]$ will generically be referred to as "analysis information". The MUX 306 transfers the analysis information of the input frame to the encoding controller 103 via a direct bus that directly connects the image analyzer 101 and the encoding controller 103.

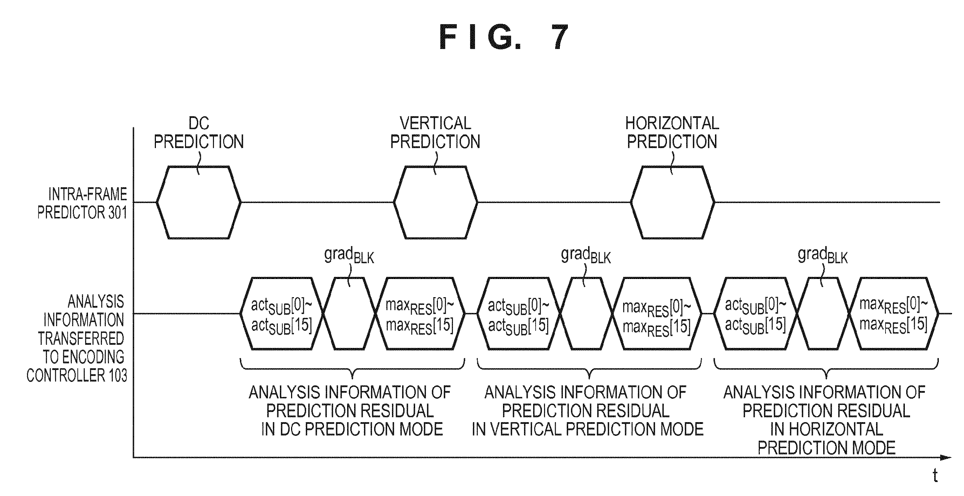

Intra-frame prediction by the intra-frame predictor 301 and the analysis information of the input frame transferred to the encoding controller 103 will be described with reference to the timing chart of Fig. 7. As shown in Fig. 7, when the intra-frame predictor 301 performs the DC prediction mode, the analysis information of the prediction residual block is transferred to the encoding controller 103. After that, analysis information for the vertical prediction mode and that for the horizontal prediction mode are sequentially transferred to the encoding controller 103.

Note that the analysis information transfer method is not limited to the time division multiplexing using the direct bus. For example, each analysis information may be recorded in the register of the image analyzer 101, and the encoding controller 103 may read out the analysis information from the register via a register bus. In this case, the MUX 306 and the encoding controller 103 need to be connected to each other by the register bus.

•Encoding Controller

The encoding controller 103 performs adaptive quantization control and coding result estimation in the input frame in accordance with the analysis information received from the image analyzer 101. Adaptive quantization control will be explained first.

Adaptive Quantization Control

In the adaptive quantization control, the quantization parameter is increased/decreased in accordance with, out of the analysis information, the activity information $\text{act}_{SUB}[i]$ and the gradient information $\text{grad}_{BLK}$ calculated from the prediction residual in the DC prediction mode, thereby improving the subjective image quality.

In the DC prediction mode, information about the spatial frequency or image characteristic of the input image is not lost. The input image and the prediction residual in the DC prediction mode have the same image characteristic information. Statistical information calculated from the prediction residual is usable for the adaptive quantization control as the image characteristic information. On the other hand, in the horizontal prediction mode and the vertical prediction mode, the reference block itself has the spatial frequency characteristic. Hence, the image characteristic information in the prediction residual may change, and inappropriate adaptive quantization control may be performed. Hence, analysis information calculated from the prediction residual in the DC prediction mode is used to control the quantization parameter.

When the human visual characteristic is taken into consideration, the degradation in image quality caused by quantization is subjectively unnoticeable in a region where the activity is high. On the other hand, in a region where the activity is low (flat region), the degradation in image quality caused by quantization is noticeable. Additionally, in a region with an even gradient in the frame, the degradation in image quality caused by quantization is noticeable. as in the region where the activity is low.

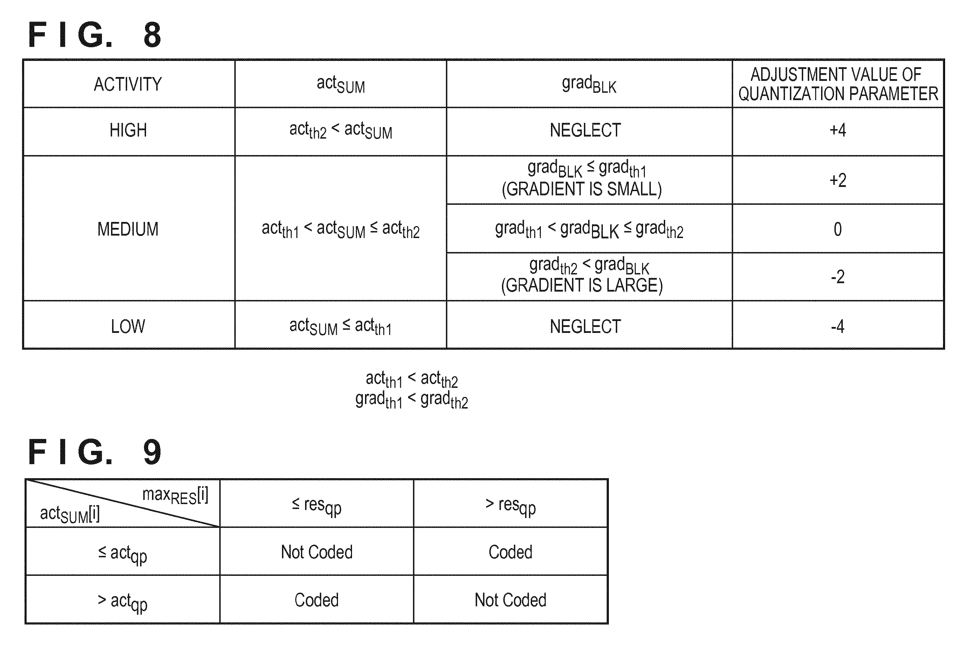

Fig. 8 shows an algorithm of increasing/decreasing a default quantization parameter given to each image in accordance with analysis information obtained from the prediction residual in the DC prediction mode. Referring to Fig. 8, $\text{act}_{SUM}$ is the sum of activities $\text{act}_{SUB}[0]$ to $\text{act}_{SUB}[15]$ of each prediction residual sub block, and $\text{act}_{th1}$ and $\text{act}_{th2}$ ($\text{act}_{th1} < \text{act}_{th2}$) are fixed values used as the thresholds of the sum $\text{act}_{SUM}$ of activities. Similarly, $\text{grad}_{th1}$ and $\text{grad}_{th2}$ ($\text{grad}_{th1} < \text{grad}_{th2}$) are fixed values used as the thresholds of the gradient information $\text{grad}_{BLK}$.

As described above, since the degradation in image quality is unnoticeable in the region where the activity is "high", the encoding controller 103 increases the quantization parameter to decrease the code amount ("+4" in the example shown in Fig. 8). Reversely, since the influence on the subjective image quality is large in the region where the activity is "low", the encoding controller 103 decreases the quantization parameter ("-4" in the example shown in Fig. 8) to suppress the degradation in image quality although the code amount increases.

In a region where the activity is "medium", the encoding controller 103 controls the quantization parameter in accordance with the gradient information $grad_{BLK}$. That is, in a region where the gradient is small, the quantization parameter is increased ("+2" in the example shown in Fig. 8). In a region where the gradient is large, the quantization parameter is decreased ("-2" in the example shown in Fig. 8). In a region where both the activity and the gradient are medium, the quantization parameter is not changed (that ism "±0").

As described above, the encoding controller 103 performs adaptive quantization control in accordance with the human visual characteristic, thereby improving the subjective image quality in a situation where the bit rate of a compressed video is limited.

Estimation of Coding Result

Estimation of a coding result will be described next. The encoding controller 103 estimates based on the analysis information and the quantization parameter whether the coding result is "Coded" or "Not Coded".

Fig. 9 shows an algorithm of estimating the coding result. The coding result estimation algorithm uses the activity $act_{SUB}[i]$ and the maximum residual $max_{RES}[i]$ of the prediction residual sub block including $4 \times 4$ pixels as the inputs.

Referring to Fig. 9, $act_{qp}$ is the threshold of the activity $act_{SUB}[i]$, which is decided in accordance with the quantization parameter, and $res_{qp}$ is the threshold of the maximum residual $max_{RES}[i]$, which is decided in accordance with the quantization parameter. As shown in Fig. 9, the encoding controller 103 compares the activity $act_{SUB}[i]$ and the maximum residual $max_{RES}[i]$ with the thresholds decided by the quantization parameter, and estimates whether the coding result is "Coded" or "Not Coded".

In a prediction residual sub block where the activity $act_{SUB}[i]$ is small, the coding result can be estimated to be "Not Coded" without actual orthogonal transformation or quantization. If only one pixel of a frame has a large prediction residual, the coding result may be "Coded" due to a large orthogonal transformation coefficient generated by orthogonal transformation even if the activity $act_{SUB}[i]$ of the prediction residual sub block is relatively small. Considering such a case in which a large prediction residual locally occurs, the coding result is estimated using both the activity $act_{SUB}[i]$ and the maximum residual $max_{RES}[i]$, and the coding result estimation accuracy is improved.

If the quantization parameter is large, the number of orthogonal transformation coefficients having larger values is zero. Hence, the larger the quantization parameter is, the larger the thresholds $act_{qp}$ and $res_{qp}$ are set, thereby improving the coding result estimation result.

[Coding Processing]

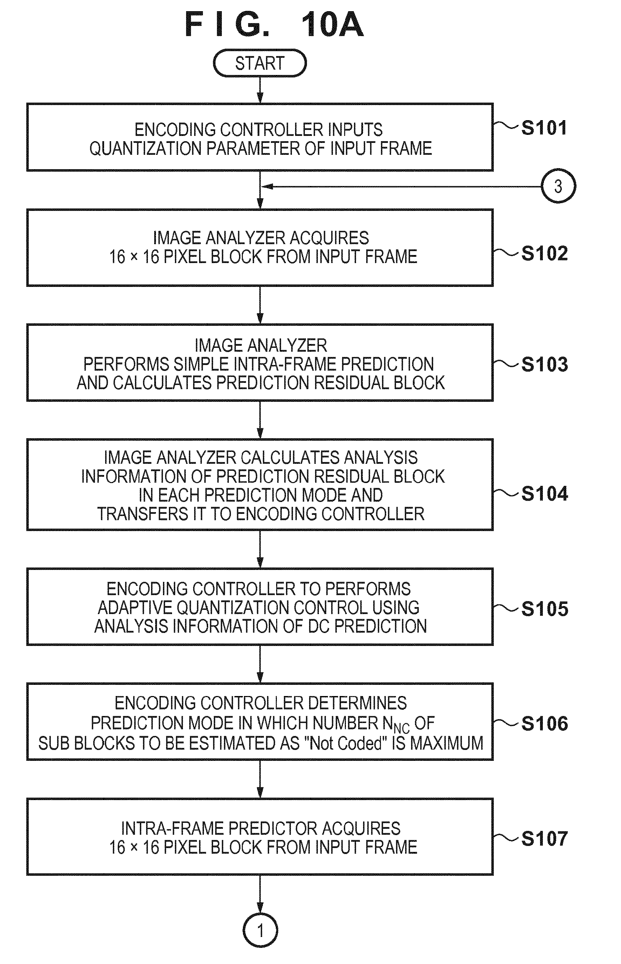

Coding processing of the image analyzer 101 and the encoder 102 will be described with reference to the flowcharts of Figs. 10A to 10C. Note that Figs. 10A to 10C illustrate coding processing of one frame of a coding target.

The encoding controller 103 inputs the default quantization parameter for an input frame (S101). The default quantization parameter is decided based on code amount control outside the apparatus as described above.

Next, the image analyzer 101 acquires a $16 \times 16$ pixel block from the input frame (S102). The intra-frame predictor 301 performs simple intra-frame prediction using the DC prediction mode/vertical prediction mode/horizontal prediction mode, and calculates the prediction residual blocks of the $16 \times 16$ pixel block (S103). The activity calculator 303, the gradient determiner 304, and the maximum residual calculator 305 calculate the analysis information of the prediction residual block of each prediction mode. The MUX 306 transfers the analysis information of the input frame to the encoding controller 103 (S104).

The encoding controller 103 performs adaptive quantization control shown in Fig. 8 using the analysis information in the DC prediction mode to improve the subjective image quality (S105). Additionally, for the DC prediction mode/vertical prediction mode/horizontal prediction mode, the coding result is estimated for each prediction residual sub block shown in Fig. 9, and a prediction mode in which the number $N_{NC}$ of sub blocks of "Not Coded" is maximized is determined (S106). The prediction mode determined in step S106 will be referred to as a determined prediction mode hereinafter.

The intra-frame predictor 104 acquires a $16 \times 16$ pixel block from the input frame (S107). The encoding controller 103 compares the number $N_{NC}$ of sub blocks estimated as "Not Coded" in the determined prediction mode with a predetermined threshold Nth (S108). Note that the threshold Nth is used to determine whether to perform normal intra-frame prediction or low power mode coding.

The encoding controller 103 controls intra-frame prediction coding of the $16 \times 16$ pixel block based on the comparison result in step S108. If the number of sub blocks estimated as "Not Coded" in the determined prediction mode is equal to or smaller than the threshold ($N_{NC} \leq Nth$), the encoding controller 103 determines to perform coding by normal intra-frame prediction and advances the process to step S109.

In the normal intra-frame prediction, the intra-frame predictor 104 searches for all prediction modes in each $4 \times 4$ pixel sub block obtained by driving the $16 \times 16$ pixel block and decides the prediction mode (S109). Note that the prediction mode may be searched for based on the determined prediction mode without comprehensively searching for all prediction modes. Although details will be described later, the intra-frame predictor 104, the CODEC 105, and the like execute prediction coding and local decoding of the $4 \times 4$ pixel sub block (S110). When the processing of the $4 \times 4$ pixel sub block has completed, the encoding controller 103 determines whether processing of all sub blocks of the $16 \times 16$ pixel block has completed (S111). If the processing has not completed, the process returns to step S109. If the processing of all sub blocks of the 16 × 16 pixel block has completed, the process advances to step S121.

On the other hand, if the number of sub blocks estimated as "Not Coded" in the determined prediction mode exceeds the threshold ($N_{NC}$ > Nth), the encoding controller 103 determines to perform low power mode coding. The process branches in accordance with the estimation of the coding result of the sub block (S112). For a sub block estimated as "Coded" in the determined prediction mode, prediction coding and local decoding in the determined prediction mode are performed (step S113).

For a sub block estimated as "Not Coded" in the determined prediction mode, the encoding controller 103 supplies only the DC coefficient of the sub block to the CODEC 105 and causes it to execute coding and local decoding (S114). Note that the DC coefficient of the sub block can be obtained by referring to $act_{AVE}[i]$ that is the average value of the prediction residuals used in activity calculation.

That is, in step S114, the CODEC 105 performs quantization and entropy encoding of the DC coefficient of the sub block, and inversely quantizes the quantized DC coefficient to obtain locally decoded prediction residuals. The MUX 106 multiplexes the coded data of the quantized DC coefficient on a coded stream. The intra-frame compensator 107 adds the reference block of the sub block and the decoded prediction residuals corresponding to the DC coefficient to generate locally decoded pixels, and records some of the locally decoded pixels in the memory 108. Note that since all AC coefficients in a sub block estimated as "Not Coded" are zero even after local decoding, only the DC coefficient is decoded.

When the processing of the 4 × 4 pixel sub block has completed, the encoding controller 103 determines whether processing of all sub blocks of the 16 × 16 pixel block has completed (S115). If the processing has not completed, the process returns to step S112. If the processing of all sub blocks of the 16 × 16 pixel block has completed, the process advances to step S121.

When the processing of the 16 × 16 pixel block has completed, the encoding controller 103 integrates the coding results (obtained in step S137 to be described later) calculated in steps S110, S113, and S114 to generate a coded block pattern (S121). The coded block pattern is entropy-encoded and transferred to the MUX 106 as header information together with the prediction mode and the like (S122). The MUX 106 multiplexes the header information on the coded stream (S123).

To generate the coded block pattern, the encoding controller 103 refers not to the estimation result in step S106 but the coding result obtained in actual prediction coding. This is because even when the encoding controller 103 estimates the coding result as "Coded", "Not Coded" is actually obtained in some cases. Note that the coding result obtained in actual prediction coding may be transferred to the entropy coding unit 203 (see Fig. 2), the entropy coding unit 203 may entropy-encodes the coded block pattern, and the encoded coded block pattern may be output to the MUX 106.

Next, the encoding controller 103 determines whether the coding processing of all 16 × 16 pixel blocks of the input frame has completed (S124). If the coding processing has not completed, the process returns to step S102 to code the next 16 × 16 pixel block. If the coding processing of all 16 × 16 pixel blocks of the input frame has completed, coding processing of one frame ends.

•Prediction Coding and Local Decoding of Sub Block

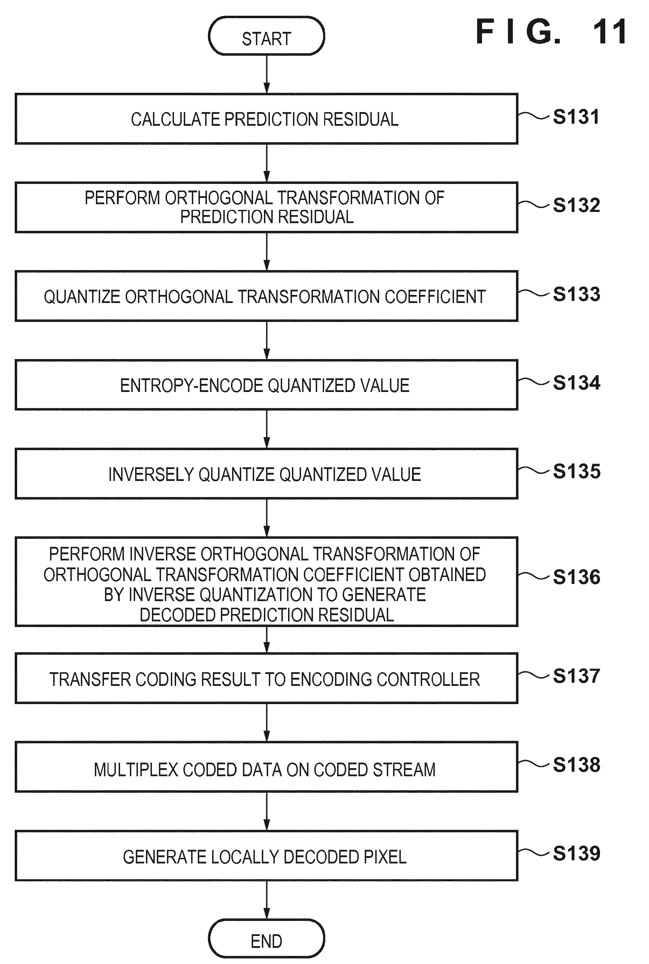

Prediction coding and local decoding (S110, S113) of a sub block will be described with reference to the flowchart of Fig. 11.

The intra-frame predictor 104 reads out the decoded pixels of an adjacent block from the memory 108, generates a reference block that is a reference pixel group corresponding to the prediction mode, and calculates the prediction residual between the sub block and the reference block (S131). Note that the prediction mode used here is the prediction mode decided in step S109 or the determined prediction mode.

The CODEC 105 performs orthogonal transformation of the prediction residual by the orthogonal transformation unit 201 (S132), quantization of the orthogonal transformation coefficient by the quantization unit 202 (S133), and entropy encoding of the quantized value by the entropy coding unit 203 (S134), thereby generating coded data. In addition, the CODEC 105 performs inverse quantization of the quantized value by the inverse quantization unit 204 (S135) and inverse orthogonal transformation of the orthogonal transformation coefficient obtained by the inverse quantization by the inverse orthogonal transformation unit 205 (S136), thereby generating a locally decoded prediction residual.

At this time, the quantization unit 202 and the inverse quantization unit 204 use the quantization parameter input from the encoding controller 103 after having undergone adaptive quantization control. The entropy coding unit 203 also determines whether the coding result of the quantized value of the sub block is "Coded" or "Not Coded", and transfers the determination result to the encoding controller 103 (S137).

The MUX 106 multiplexes the coded data on the coded stream (S138). The intra-frame compensator 107 generates the reference block of the sub block based on the prediction mode, adds the reference block and the decoded prediction residuals to generate locally decoded pixels, and records some of the locally decoded pixels in the memory 108 (S139).

If the candidate of the prediction mode searched by the intra-frame predictor 104 is H.264 in step S109, the number of candidates is nine at maximum. When the prediction mode is HEVC, the number of candidates is 34 at maximum. Hence, the prediction mode search consumes much power and long processing time. In addition, orthogonal transformation and quantization in prediction residual coding also need much power because a multiplier and a divider are used.

According to this embodiment, searching of the prediction mode of the 16 × 16 pixel block, in the case where low power mode coding is determined in step S108, or prediction residual coding of the AC coefficients, in the case where the sub block is estimated as "Not Coded", can be omitted. Since the processes consume much power, the power consumption is expected to be largely reduced by omitting these processes.

On the other hand, the intra-frame predictor 301 in the image analyzer 101 supports only a few prediction modes that need no multiplier to generate a reference block and consume little power, and therefore consumes a little power. An image generally includes a region (for example, flat region) to be estimated as "Not Coded" even in the small number of prediction modes. Since low power mode coding is performed for a block belonging to such a region, the power consumption is expected to largely decrease.

Modification of Embodiment

The encoding controller 103 preferably has a clock control function of controlling a clock signal to internal processing of the encoder 102. During the period in which the processing of a sub block estimated as "Not Coded" is omitted, the clock signal supplied to the intra-frame predictor 104 and the CODEC 105 is stopped, thereby largely reducing power consumed by the clock signal as well.

To extract image characteristic information for adaptive quantization control, almost the same analysis information as that for estimation of the coding result can be used. Hence, the image characteristic information can be extracted by adding only small processing, and high image quality can be implemented by the adaptive quantization control without large overhead of processing (an increase in the power consumption).

The processing shown in Figs. 10A to 11 can be implemented as a program to be executed by a microprocessor (CPU). When executing the program, prediction mode search (S109) and prediction residual coding processing (S110, S113) are unnecessary for a block to perform low power mode coding, and the processing can speed up. It is also possible to extract the image characteristic information without overhead of processing and implement high image quality by adaptive quantization control.

Note that the processing shown in Figs. 10A to 11 assumes processing of a luminance component. In general, an image includes chromatic components together with the luminance component. For the chromatic components as well, the coding result may be estimated by the image analyzer 101 and the encoding controller 103 and operation of the intra-frame predictor 104 and the CODEC 105 for chrominance components can be omitted as well as for luminance components. Or when operation of luminance components is omitted, the intra-frame predictor 104 and the CODEC 105 may be activated in a mode to perform only processing of the chromatic components. In the latter case, when performing low power mode coding of a block of interest, a prediction mode close to intra-frame prediction of the luminance component is preferably used as the prediction mode of intra-frame prediction of the chromatic components from the viewpoint of power consumption reduction.

The explanation of the operation of the image analyzer 101 and the processing shown in Figs. 10A to 11 assume 4 × 4 pixels as the sub block size. However, the embodiment is not particularly limited to the specific sub block size. For example, a 16 × 16 pixel block can also be coded as four 8 × 8 pixel sub blocks. In this case, coding result estimation by the encoding controller 103 and intra-frame prediction by the intra-frame predictor 104 are done based on each 8 × 8 pixel sub block.

In addition, the coding block size that is the coding unit is not limited to 16 × 16 pixels. For example, the encoder can also cope with a block size of 32 × 32 pixels or 64 × 64 pixels defined in HEVC.

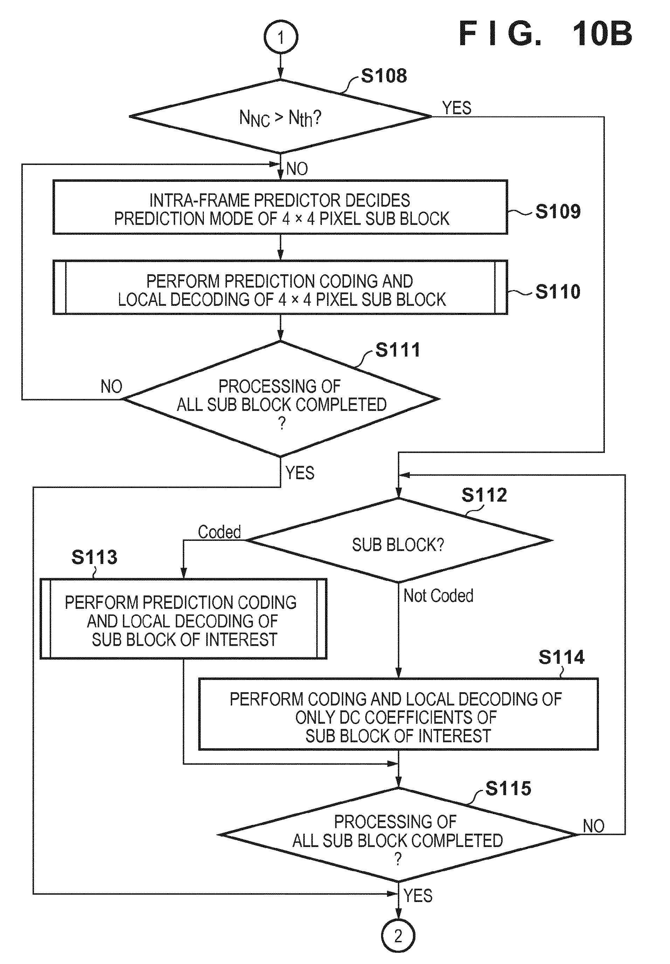

In this embodiment, the degree of reduction of power consumption (or speedup of processing) and the coding efficiency (generated code amount) have a tradeoff relationship. When the threshold Nth used to determine whether to perform low power mode coding in step S108 of Fig. 10B is made small, the number of sub blocks to omit the prediction mode search increases, and the power consumption reduction amount increases. However, if the threshold Nth is too small, the prediction mode search in each sub block is difficult to perform, and the code amount of sub blocks estimated as "Coded" tends to increase. Conversely, if the threshold Nth is too large, the code amount decreases. However, the number of sub blocks to omit the prediction mode search decreases, and the power consumption reduction effect lowers.

Using this tradeoff relationship, image capturing equipment or the like including the image encoding apparatus can control to make the threshold Nth large when the battery level is sufficiently high or make the threshold Nth small when the battery level is low.

In this embodiment, the degree of reduction of power consumption and the image quality also have a tradeoff relationship. When the thresholds $act_{qp}$ and $res_{qp}$ shown in Fig. 9 are made large, the number $N_{NC}$ of sub blocks estimated as "Not Coded" increases, and the number of blocks to perform low power mode coding increases. However, if a sub block that should originally be estimated as "Coded" is processed as "Not Coded", the image quality degrades. When the thresholds $act_{qp}$ and $res_{qp}$ are made large, the probability of occurrence of the degradation in image quality rises. Conversely, when the thresholds $act_{qp}$ and $res_{qp}$ are made small, the probability of occurrence of the degradation in image quality lowers. However, the number $N_{NC}$ of sub blocks estimated as "Not Coded" decreases, and the power consumption reduction effect lowers.

The above-described control based on the battery level is possible even for the tradeoff relationship between the power consumption and the image quality. That is, when the battery level is sufficiently high, the thresholds $act_{qp}$ and $res_{qp}$ are made small. When the battery level is low, the thresholds $act_{qp}$ and $res_{qp}$ are made large.

The intra-frame predictor 104 generates a reference block for intra-frame prediction from the locally decoded pixels of an adjacent block. To the contrary, the intra-frame predictor 301 in the image analyzer 101 generates a reference block from the input pixels of an adjacent block. When the quantization parameter is small (high bit rate), and the difference between an input pixel and a locally decoded pixel is small, the value of the input pixel and the value of the locally decoded pixel are close, and the influence on the image quality is small. However, when the quantization parameter is large (low bit rate), and the difference between an input pixel and a locally decoded pixel is large, the degradation in image quality caused when a sub block that should originally be estimated as "Coded" is estimated as "Not Coded" becomes large.

The problem of image quality degradation at the low bit rate can be solved by performing the processing of step S113 without performing the determination of step S112 for all sub blocks determined to perform low power mode coding in step S108. Although the power consumption reduction effect lowers, the power consumption can still largely be reduced as compared to a case in which a number of prediction modes are searched.

The prediction modes used by the intra-frame predictor 301 in the image analyzer 101 are not limited to the above-described three prediction modes, and any prediction mode is usable. For example, when a prediction mode known in advance to be effective for power consumption reduction is added, the power consumption can effectively be reduced. However, if a prediction mode that is not so effective is added, the power consumption increases due to overhead of processing.

The pieces of analysis information to be calculated by the image analyzer 101 are not limited to the above-described activity, gradient, and maximum residual. Any statistical information is usable, and for example, a variance may be used in place of the activity, and an orthogonal transformation coefficient that has undergone simple orthogonal transformation (for example, Hadamard transform) may be used. As for the gradient calculation as well, the gradient information may be calculated using any arrangement, as a matter of course. Another type of image characteristic information can also easily be added to the image analyzer 101.


Second Embodiment

An image encoding apparatus and an image encoding method according to the second embodiment of the present invention will be described below. Note that the same reference numerals as in the first embodiment denote the same parts in the second embodiment, and a detailed description thereof will be omitted.

In the first embodiment, an example has been described in which a coding result is estimated for each sub block including $4 \times 4$ pixels, and a coded block pattern obtained by integrating the coding results for each block is multiplexed on a coded stream as header information. However, in coding at a low bit rate, the header information including the coded block pattern also preferably has an information amount as small as possible. In HEVC, the transformation block size to define a coding result has a degree of freedom, and the size can adaptively be decided in coding. To reduce the code amount of header information, the size of the sub block is preferably made large. In the second embodiment, an example will be explained in which the sub block size is adaptively decided based on analysis information.

An encoding controller 103 according to the second embodiment determines whether all sub blocks ($4 \times 4$ pixels or $8 \times 8$ pixels) in a processing target block ($16 \times 16$ pixels) are "Not Coded" and whether the determined prediction mode is the DC prediction mode. If all sub blocks are "Not Coded", and the determined prediction mode is the DC prediction mode (to be referred to as an "enlargement condition" hereinafter), the pixels in the processing target block have almost the same value at a high probability. If all pixels in the processing target block have the same value, all AC coefficients are zero even when transformation is performed for the $16 \times 16$ pixel block.

Hence, when the enlargement condition is met, the transformation block size is set to $16 \times 16$ pixels. A coding result for each $16 \times 16$ pixel block is estimated as "Not Coded", and a coded block pattern is generated. As a result, as compared to a case in which the coding result is defined for each $4 \times 4$ pixel sub block, the code amount of the coded block pattern is reduced. The reduction of the information amount of the header information is particularly effective in coding at a low bit rate.

If a block is a flat block in which all pixels have the same value, adjacent blocks are also likely to be flat. Hence, the processing target block and the peripheral blocks can be combined, and coding can be performed using a larger block size as the coding unit.

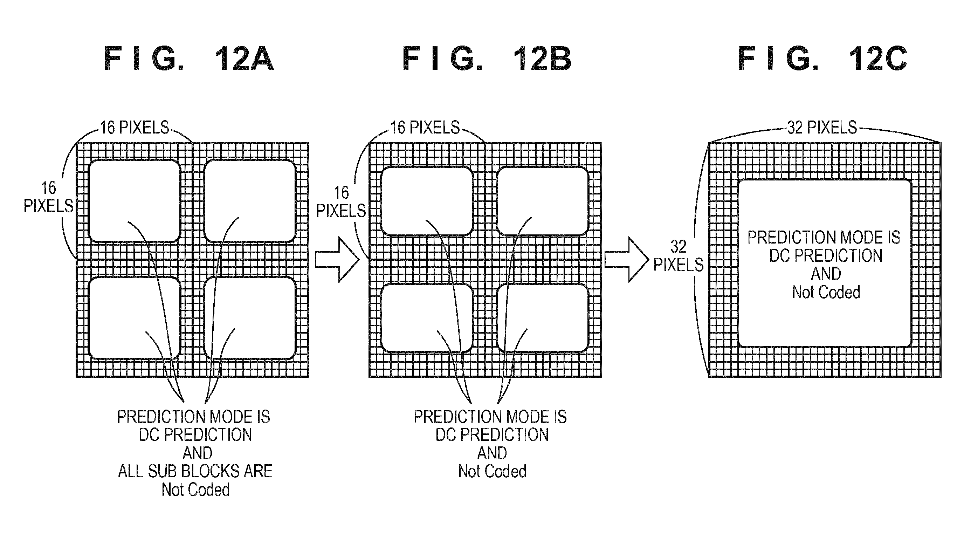

Block size enlargement will be described with reference to Figs. 12A to 12C. The encoding controller 103 determines the enlargement condition in a state shown in Fig. 12A. If the enlargement condition is met, the transformation block size is first set to 16 × 16 pixels, and the coding result of the 16 × 16 pixel block is estimated as "Not Coded".

The same determination is done for the adjacent blocks. If the enlargement condition is met in all of the four 16 × 16 pixel blocks shown in Fig. 12B, the coding unit and the transformation block size are set to 32 × 32 pixels, and the coding result of the 32 × 32 pixels is estimated as "Not Coded" (Fig. 12C). Note that the state shown in Fig. 12B frequently occurs in a flat portion of a frame.

When a coded block pattern is generated using 32 × 32 pixels as the coding unit, the code amount of the coded block pattern can be decreased as compared to a case in which the coding unit is 4 × 4 pixels. Even if the enlargement condition is not met in an adjacent block, the code amount of the coded block pattern can be decreased by setting the coding unit to 16 × 16 pixels, as shown in Fig. 12B.

Header information decreased by enlarging the block size is not limited to the coded block pattern. The code amount of header information associated with the prediction mode can also be decreased by adaptively changing the prediction block size.

When the block size of prediction or transformation can adaptively be decided, as in HEVC, the code amount of header information can largely be decreased by adaptively deciding the block size based on coding result estimation.

The above-described transformation block size enlargement is applicable to any block size. For example, the transformation block size enlargement is applicable to a transformation block size or prediction block size such as 16 × 8 pixels or 32 × 16 pixels that is not square.

Third Embodiment

An image encoding apparatus and an image encoding method according to the third embodiment of the present invention will be described below. Note that the same reference numerals as in the first and second embodiments denote the same parts in the third embodiment, and a detailed description thereof will be omitted.

In the third embodiment, an example will be described in which filter processing in the DC prediction mode is combined to acquire edge information of an object image included in a frame at a block boundary in addition to analysis information described in the first and second embodiments. Note that when analysis information is acquired for each 16 × 16 pixel block or 4 × 4 pixel block, the edge information of an object image existing at the block boundary of the 16 × 16 pixel block cannot be extracted.

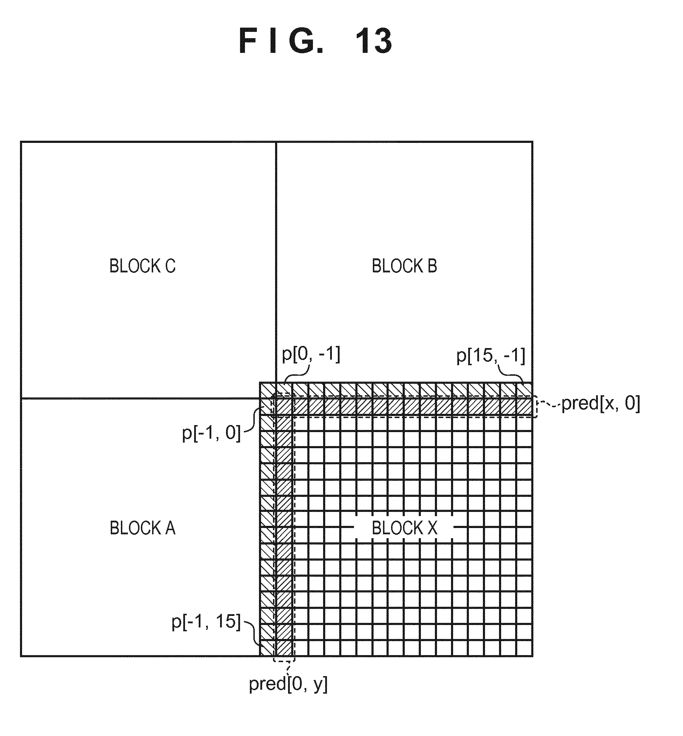

Fig. 13 shows a reference pixel group generated by filter processing in DC prediction of HEVC. In the DC prediction of HEVC, a reference block at the time of DC prediction is calculated by applying, to the coefficients of the upper and lower edges of a block, filter processing expressed as

$$\mathrm{DC_{VAL}} = (\Sigma_y p[-1, \ y] + \Sigma_y p[x, \ -1] + 16)/32 \qquad \ldots (8)$$

$$\mathrm{pred}[0, \ 0] = (p[-1, \ 0] + 2 \times \mathrm{DC_{VAL}} + p[0, \ -1] + 2)/4 \qquad \ldots (9)$$

$$\mathrm{pred}[x, \ 0] = (p[x, \ -1] + 3 \times \mathrm{DC_{VAL}} + 2)/4 \qquad \ldots (10)$$

$$\mathrm{pred}[0, \ y] = (p[-1, \ y] + 3 \times \mathrm{DC_{VAL}} + 2)/4 \qquad \ldots (11)$$

$$\mathrm{pred}[x, \ y] = \mathrm{DC_{VAL}} \qquad \ldots (12)$$

where $0 \le x \le 15$, and
$0 \le y \le 5$

Equations (10) and (11) can be rewritten as

$$\text{pred}[x, 0] = \{4 \times DC_{VAL} - (DC_{VAL} - p[x, -1] - 2)\}/4$$

$$...(13)$$

$$\text{pred}[0, y] = \{4 \times DC_{VAL} - (DC_{VAL} - p[-1, y] - 2)\}/4$$

$$...(14)$$

In this case, a simpler arrangement without using a multiplier can be obtained.

The second term as the intermediate result of each of equations (13) and (14) represents the difference value at the block boundary between the reference block and an adjacent block (a block A and a block B). The edge of an object image generally has continuity. If the edge of an object image exists at the boundary between a block X as the processing target block and the block B in Fig. 13, the difference between the pixel group of the block A and that of the block B becomes large. When the difference between the pixel groups becomes large, the difference between values $DC_{VAL}$ that are the averages between the block A and the block B as the second term of each of equations (13) and (14) becomes large. It is therefore possible to use the value of the second term as information for block boundary detection.

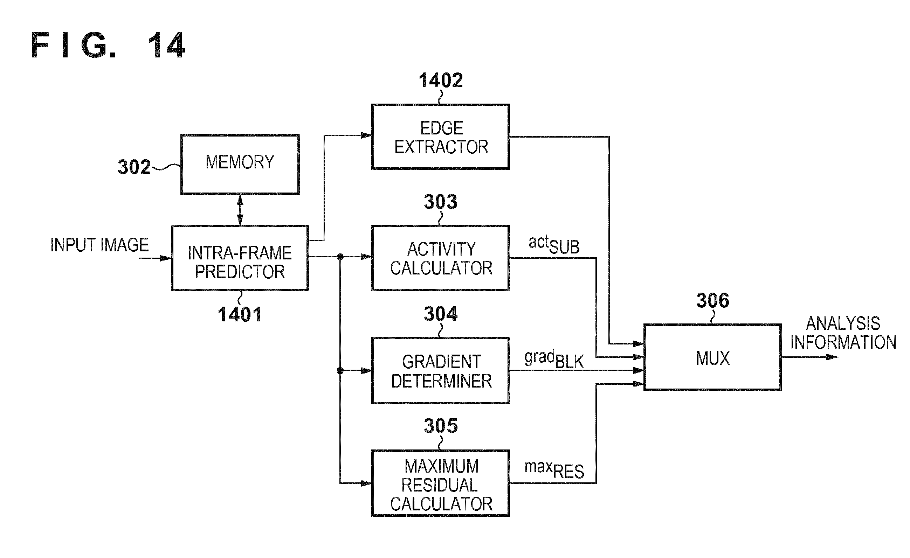

Fig. 14 shows the detailed arrangement of an image analyzer 101 according to the third embodiment. An intra-frame predictor 1401 performs processing in the DC prediction mode using equations (8), (9), and (12) to (14). Note that the intra-frame predictor 1401 performs processing in the horizontal prediction mode and the vertical prediction mode, as in the first embodiment. According to the DC prediction mode, the intra-frame predictor 1401 transfers the value (difference value) of the second term of each of equations (13) and (14) as the difference value between the adjacent block and the reference block to an edge extractor 1402.

The edge extractor 1402 calculates the sum of the second term of equation (13) (the sum of difference values in the horizontal direction) as the edge information of the object image in the horizontal direction, and the sum of the second term of equation (14) (the sum of difference values in the vertical direction) as the edge information of the object image in the vertical direction. The edge extractor 1402 transfers the calculated edge information of the object image to an encoding controller 103 via an MUX 306 as part of analysis information.

The encoding controller 103 performs adaptive quantization control by referring to the edge information of the object image such that a degradation in image quality does not occur on the edge of the object image where the degradation is subjectively noticeable. The transformation block size can also be decided not to lose the edge information.

As described above, when extraction of the intermediate result of filter processing and small processing are added to the arrangement of the first embodiment, the edge information of the object image can be added to the image characteristic information. This makes it possible to implement higher image quality by adaptive quantization control while implementing power consumption reduction as in the first embodiment.

Fourth Embodiment

Image encoding according to the fourth embodiment of the present invention will be described below. Note that the same reference numerals as in the first to third embodiments denote the same parts in the fourth embodiment, and a detailed description thereof will be omitted.

In the first embodiment, an example has been described in which coding of each block is performed using only intra-frame prediction. In the fourth embodiment, an example will be described in which inter-frame prediction coding is performed using motion prediction in addition to intra-frame prediction.

[Arrangement of Apparatus]

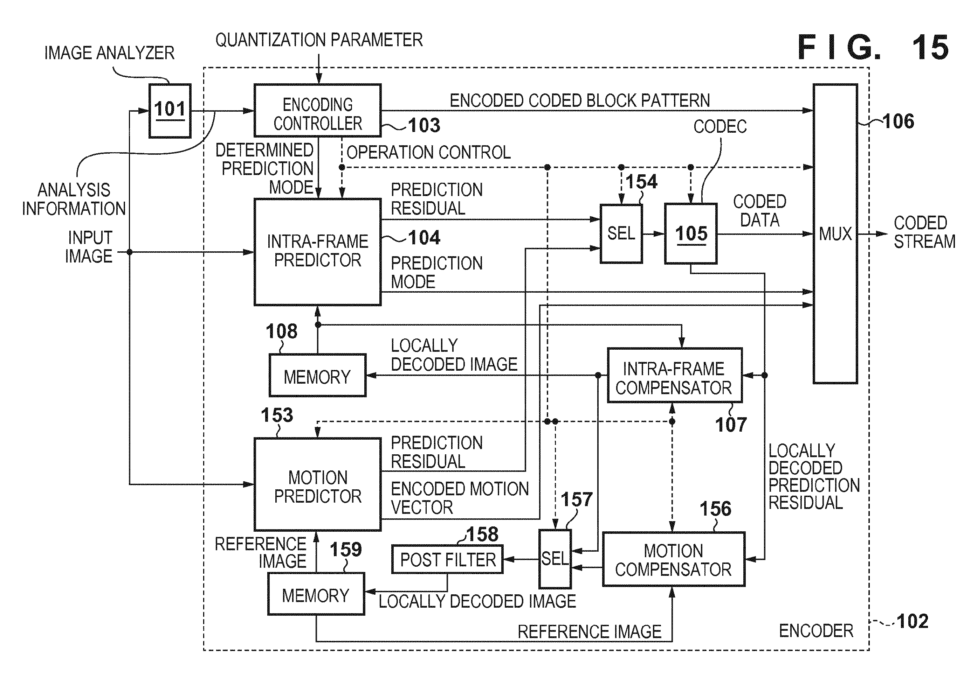

The arrangement of an image encoding apparatus according to the fourth embodiment will be described with reference to the block diagram of Fig. 15.

A motion predictor 153 calculates a motion vector candidate by a predetermined motion vector search algorithm. Note that the motion predictor 153 can use not only a specific motion vector search algorithm but also any motion vector search algorithm generally used.

Next, the motion predictor 153 reads out the pixels of a locally decoded image corresponding to the motion vector candidate from a memory 159 for motion prediction and generates a reference block. The motion predictor 153 then calculates the activity for the prediction residual between the reference block and a block of the input frame.

After calculating activities for all motion vector candidates calculated by the motion vector search algorithm, the motion predictor 153 decides a motion vector candidate having the minimum activity as the motion vector to be used for coding. The motion predictor 153 entropy-encodes the decided motion vector, transfers the encoded motion vector to an MUX 106, and outputs the prediction residual between the reference block and a block of the input frame in the decided motion vector to a selector (SEL) 154.

An encoding controller 103 receives the activity calculated by an image analyzer 101, and an activity corresponding to the motion vector found by the motion predictor 153. The encoding controller 103 compares the two activities, and predicts which one of the code amount generated by intra-frame prediction coding of the block and the code amount generated by inter-frame prediction coding of the block is small. The SELs 154 and 157 are controlled based on the prediction result.

Under the control of the encoding controller 103, the SEL 154 selectively outputs the prediction residual output from an intra-frame predictor 104 or the prediction residual output from the motion predictor 153 to a CODEC 105.

If the encoding controller 103 has selected inter-frame prediction coding, the MUX 106 outputs a coded stream on which the encoded motion vector is multiplexed in addition to coded data obtained by entropy encoding of the prediction residual and an encoded coded block pattern.

A motion compensator 156 outputs, to the SEL 157, a locally decoded image obtained by adding the reference block used for motion prediction to the locally decoded prediction residual output from the CODEC 105. Under the control of the encoding controller 103, the SEL 157 selectively outputs the locally decoded image output from an intra-frame compensator 107 or the locally decoded image output from the motion compensator 156 to a post filter 158.

The post filter 158 performs filter processing such as a deblocking filter to the locally decoded image to reduce the degradation in image quality of the locally decoded image, and records the locally decoded image after the filter processing in the memory 159. The locally decoded image recorded in the memory 159 is used to generate a reference block to be used for motion prediction of a subsequent frame.

[Coding Processing]

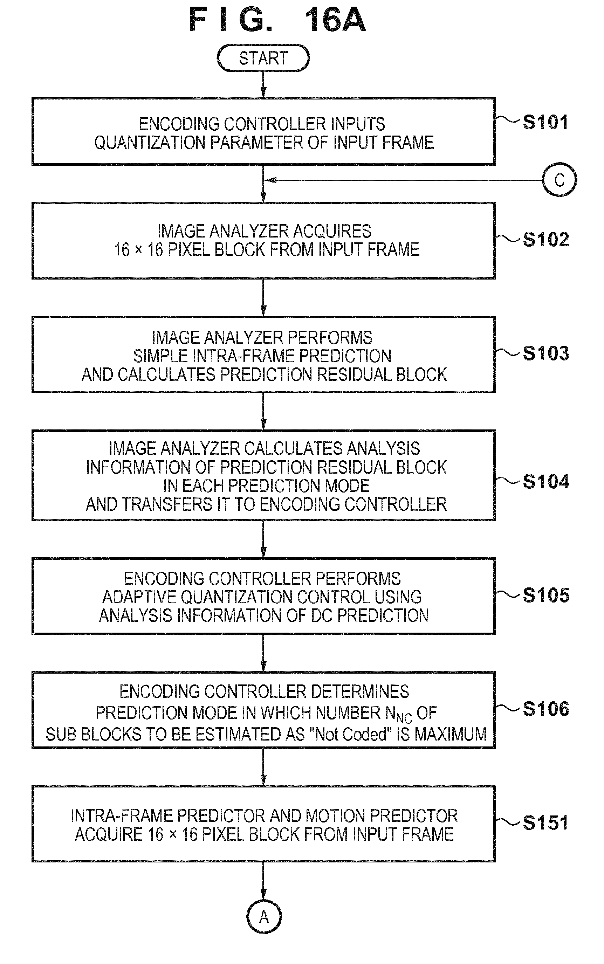

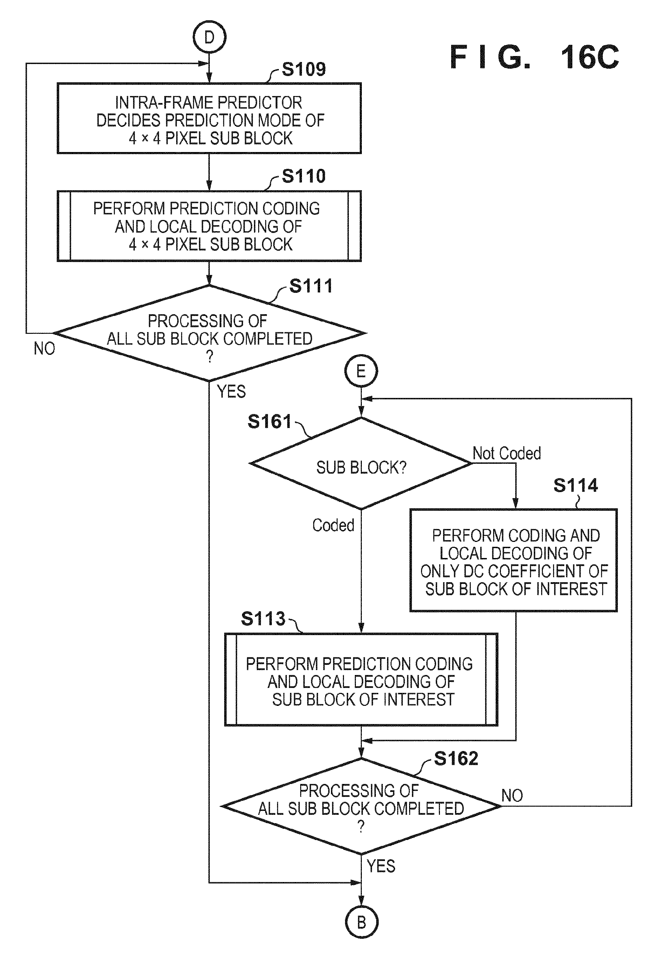

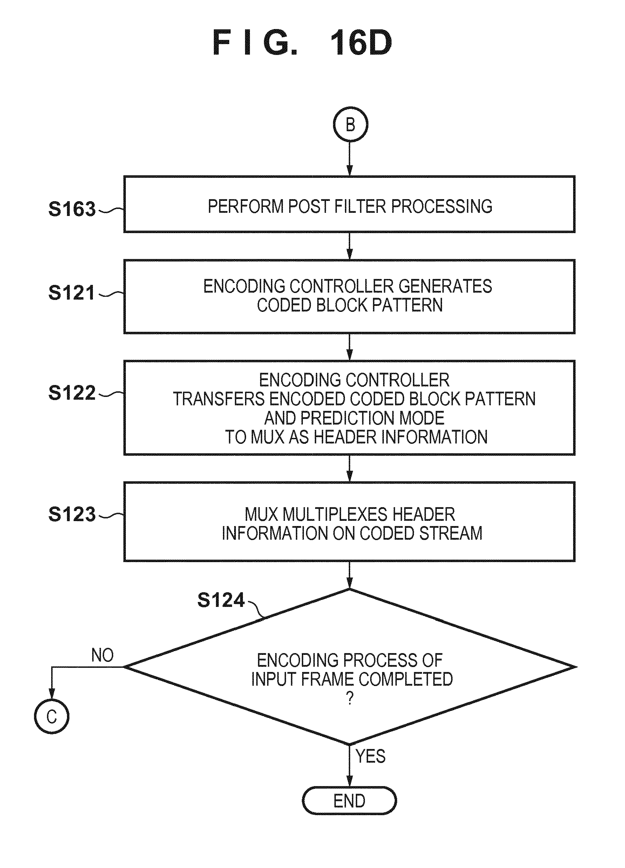

Coding processing of the image analyzer 101 and an encoder 102 will be described with reference to the flowcharts of Figs. 16A to 16D. Note that Figs. 16A to 16D illustrate coding processing of one frame of a coding target. In addition, the processes of steps S101 to S106 are the same as those of the first embodiment shown in Fig. 10A, and a detailed description thereof will be omitted.

The intra-frame predictor 104 and the motion predictor 153 acquire a $16 \times 16$ pixel block from the input frame (S151). The encoding controller 103 compares the number $N_{NC}$ of sub blocks to be estimated as "Not Coded" in the determined prediction mode with a predetermined threshold Nth (S152). Note that the threshold Nth is used to determine whether to perform normal intra-frame prediction or low power mode coding.

Upon determining in step S152 that the number of sub blocks to be estimated as "Not Coded" in the determined prediction mode exceeds the threshold ($N_{NC} >$ Nth), the code amount is predicted to be sufficiently decreased by intra-frame prediction coding of the $16 \times 16$ pixel block. Hence, the encoding controller 103 advances the process to step S161 to perform intra-frame prediction coding of the $16 \times 16$ pixel block.

On the other hand, if the number of sub blocks to be estimated as "Not Coded" in the determined prediction mode is equal to or smaller than the threshold ($N_{NC} \leq$ Nth), the encoding controller 103 advances the process to step S153 to compare the code amount of intra-frame prediction coding with the code amount of inter-frame prediction coding. The motion predictor 153 decides the motion vector of the $16 \times 16$ pixel block, calculates the prediction residual between the $16 \times 16$ pixel block and a reference block corresponding to the decided motion vector, and calculates the minimum activity (S153).

Next, the encoding controller 103 compares the minimum activity calculated by the motion predictor 153 with the minimum activity of the prediction residual calculated by the image analyzer 101, and decides the coding method of the $16 \times 16$ pixel block (S154). Note that activity calculation by the image analyzer 101 is done in step S104, and the encoding controller 103 uses the minimum one of the activities for the comparison.

If the minimum activity calculated by the image analyzer 101 is smaller, the encoding controller 103 decides to perform intra-frame prediction coding of the $16 \times 16$ pixel block, and performs the same processes as in steps S109 and S110 of Fig. 10B. The encoding controller 103 determines whether processing of all sub blocks of the $16 \times 16$ pixel block has completed (S111). If the processing has not completed, the process returns to step S109. If the processing of all sub blocks of the $16 \times 16$ pixel block has completed, the process advances to step S163. On the other hand, if the minimum activity calculated by the motion predictor 153 is smaller, the encoding controller 103 decides to perform inter-frame prediction coding of the $16 \times 16$ pixel block, and advances the process to step S155.

In inter-frame prediction coding, the motion predictor 153 performs motion vector search as in step S151 for each $4 \times 4$ pixel sub block, and decides the motion vector of each sub block (S155). The motion vector search of the sub block is performed generally using the motion vector decided in step S153 as the starting point of the search. Although details will be described later, the motion predictor 153, the CODEC 105, and the like execute inter-frame prediction coding and local decoding of the 4 × 4 pixel sub block (S156). When the processing of the 4 × 4 pixel sub block has completed, the encoding controller 103 determines whether processing of all sub blocks of the 16 × 16 pixel block has completed (S157). If the processing has not completed, the process returns to step S155. If the processing of all sub blocks of the 16 × 16 pixel block has completed, the process advances to step S163.

On the other hand, if $N_{NC}$ > Nth, of if the minimum activity calculated by the image analyzer 101 is smaller, the encoding controller 103 determines to perform intra-frame prediction coding. The process branches in accordance with the estimation of the coding result of the sub block of interest (S161). For a sub block estimated as "Coded", the same process as in step S113 of Fig. 10B is performed. The encoding controller 103 determines whether processing of all sub blocks of the 16 × 16 pixel block has completed (S162). If the processing has not completed, the process returns to step S161. If the processing of all sub blocks of the 16 × 16 pixel block has completed, the process advances to step S163.

For a sub block estimated as "Not Coded" in the determined prediction mode, the same process as in step S114 of Fig. 10B (coding of only the DC coefficient) is performed. The encoding controller 103 determines whether processing of all sub blocks of the 16 × 16 pixel block has completed (S162). If the processing has not completed, the process returns to step S161. If the processing of all sub blocks of the 16 × 16 pixel block has completed, the process advances to step S163.

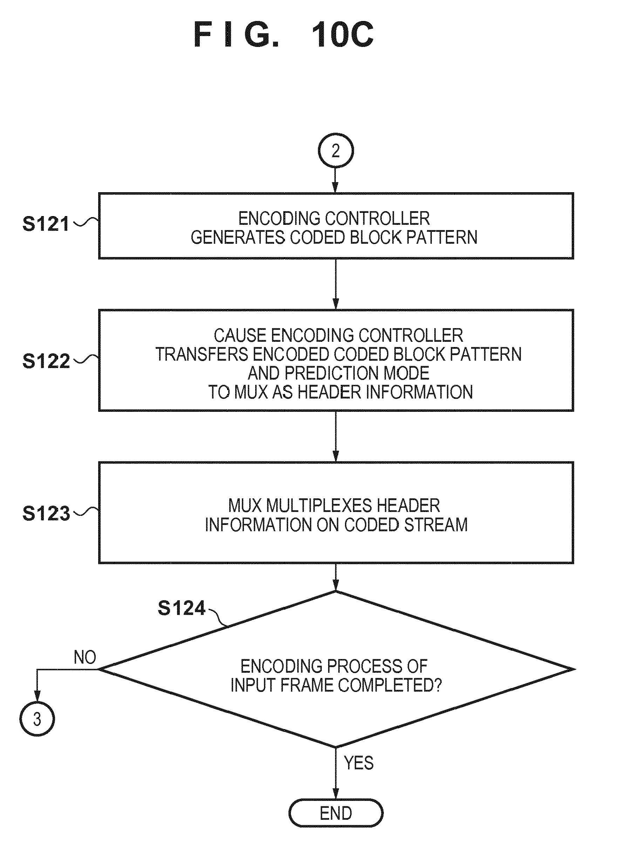

When processing of the 16 × 16 pixel block has completed, the encoding controller 103 causes the post filter 158 to perform filter processing of the locally decoded image, and records the locally decoded image that has undergone the filter processing in the memory 159 (S163). The subsequent processing is the same as that from step S121 to step S124 of Fig. 10C, and a description thereof will be omitted.

•Inter-Frame Prediction Coding

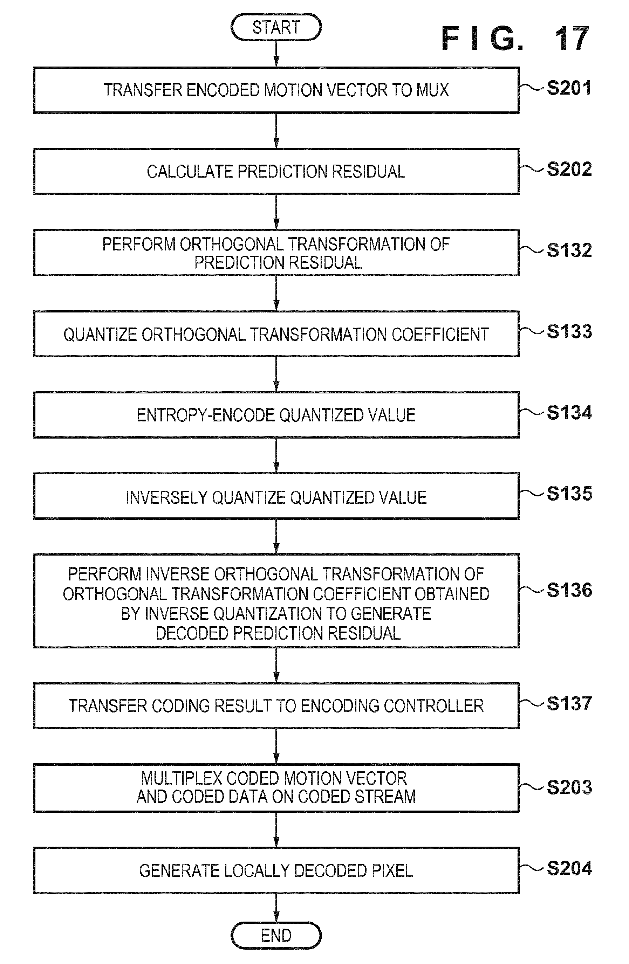

Inter-frame prediction coding (S156) will be described with reference to the flowchart of Fig. 17.

The motion predictor 153 codes the decided motion vector, and transfers the encoded motion vector to the MUX 106 (S201). The motion predictor 153 reads out the pixels of a locally decoded image corresponding to the decided motion vector from the memory 159, generates a reference block, calculates the prediction residual between the reference block and a sub block, and outputs the prediction residual to the SEL 154 (S202).

The CODEC 105 performs the same processing as that from step S132 to step S137 of Fig. 12 for the prediction residual calculated in step S202. That is, the CODEC 105 performs orthogonal transformation (S132), quantization (S133), and entropy encoding (S134) to generate coded data, and performs inverse quantization (S135) and inverse orthogonal transformation (S136) of the quantized value to generate a locally decoded prediction residual. The quantization parameter that has undergone adaptive quantization control is used for quantization. A determination result representing whether the coding result of each quantized value of the sub block is "Coded" or "Not Coded" is transferred to the encoding controller 103 (S137).

The MUX 106 multiplexes the coded data and the encoded motion vector on the coded stream (S203). The motion compensator 156 generates a locally decoded image by adding the locally decoded prediction residual and the reference block used in step S153 (S204).

Since the motion predictor 153 performs prediction using coded and locally decoded frames at different times as reference images, the memory 159 needs to accumulate decoded images of one or more frames. When the encoder 102 is implemented as an LSI (Large Scale Integration), a DRAM (Dynamic Random Access Memory) chip having low cost per storage capacity can be mounted outside the LSI as the memory 159 that needs a large size in consideration of the cost. However, power consumed by accessing the external DRAM is larger than power consumed by accessing a memory (for example, memory 108) in the LSI.

To search for an appropriate motion vector, the motion vector search range needs to be much larger than the block size (for example, 64 × 64 pixels for each 16 × 16 pixel block). Since a reference block needs to be generated for each of a lot of motion vector candidates while reading out image data in the motion vector search range from the DRAM, the motion vector search processing generally consumes extremely large power. Inter-frame prediction coding with the motion vector search generally consumes power more than intra-frame prediction coding.

However, in general, when the intra-frame prediction coding is used as an alternate to the inter-frame prediction coding, the code amount increases. In the fourth embodiment, the increase in the code amount can be suppressed because simple intra-frame prediction is performed after confirming using analysis information extracted in advance that the code amount can sufficiently be decreased.

As described above in the first embodiment, in a flat region in an input frame, the code amount can be decreased by intra-frame prediction processing by the image analyzer 101, and the coding result is often estimated as "Not Coded". When intra-frame prediction coding with little power consumption is performed in place of inter-frame prediction coding for a block determined to perform low power mode coding, the power consumption can largely be reduced particularly in a sub block whose coding result is estimated as "Not Coded."

Modification of Fourth Embodiment

In the fourth embodiment as well, the encoding controller 103 preferably has a clock control function of controlling a clock signal to internal processing of the encoder 102, as in the modification of the first embodiment. Upon deciding to perform low power mode coding, the encoding controller 103 stops the clock signal to the motion predictor 153 in addition to the stop of the clock signal in the first embodiment, thereby reducing power consumption.

As for image characteristic information as well, the image characteristic information can be extracted by adding only small processing, and high image quality can be implemented by the adaptive quantization control without large overhead of processing (an increase in the power consumption), as in the first embodiment.

The processing shown in Figs. 16A to 17 can be implemented as a program to be executed by a CPU, as in the first embodiment. When executing the program, motion prediction processing (S153) can be omitted for a block to perform coding corresponding to the low power mode, and the processing can speed up.

The block size that is the motion predictive unit is not limited to $4 \times 4$ pixels or $16 \times 16$ pixels. For example, a block size such as 32 x 32 pixels or 64 x 64 pixels defined in HEVC is also usable as the motion predictive unit.

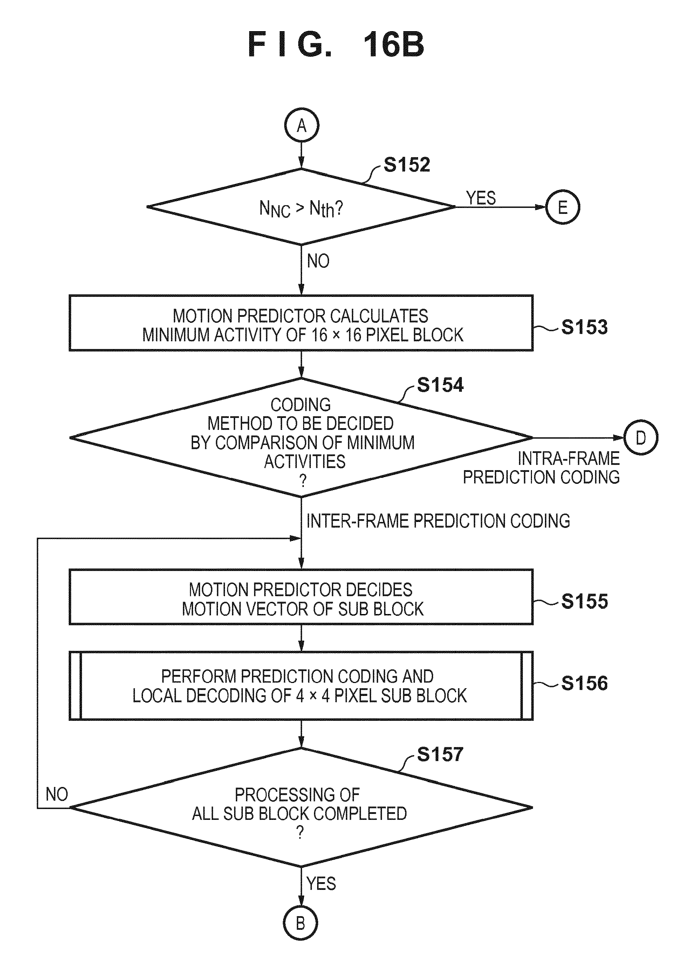

In the fourth embodiment, the degree of reduction of power consumption (or speedup of processing) and the coding efficiency (generated code amount) have a tradeoff relationship. When the threshold Nth of low power mode coding in step S152 of Fig. 16B is made small, the number of sub blocks to omit motion prediction increases, and the power consumption reduction amount increases. However, if the threshold Nth is too small, the motion prediction in each sub block whose coding result is estimated as "Coded" is difficult to perform, and the code amount tends to increase. Conversely, if the threshold Nth is too large, the code amount decreases. However, the number of sub blocks to perform low power mode coding decreases, and the power consumption reduction effect lowers. Hence, as in the first embodiment, image capturing equipment or the like including the image encoding apparatus can implement control according to the battery.

As described above, according to the above-described embodiments, for example, it is possible to reduce power consumed for the prediction mode search or motion vector search in intra-frame prediction by performing intra-frame prediction coding using simple intra-frame prediction in a flat portion of a frame. It is also possible to extract image characteristic information without largely increasing the power consumption and circuit scale.

Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image encoding apparatus for performing prediction coding of image data,
   **characterized by** comprising:

   an analysis unit (101) configured to divide an input image into first blocks, and to generate analysis information associated with intra-frame prediction of the input image for each first block;
   a first prediction unit (104) configured to divide the input image into second blocks, and to perform the intra-frame prediction so as to generate a prediction residual of each second block;
   an encoding unit (105) configured to encode a DC component of the second block or the prediction residual of the second block; and
   a control unit (103) configured to estimate, for each first block, a coding result of the encoding unit based on the analysis information, and to control the first prediction unit and the encoding unit based on the estimation.

2. The apparatus according to claim 1, wherein the analysis unit comprises a second prediction unit (301) configured to perform the intra-frame prediction and generate a prediction residual block representing the prediction residual of the first block, and
wherein the analysis unit generates the analysis information from the prediction residual block.

3. The apparatus according to claim 2, wherein the analysis unit comprises an activity calculation unit (303) configured to divide the prediction residual block into sub blocks and calculate a sum of the absolute differences between the prediction residuals and an average value of the prediction residuals for each sub block as a part of the analysis information.

4. The apparatus according to claim 2 or 3, wherein the analysis unit comprises a gradient determination unit (304) configured to calculate a gradient of the prediction residual in a vertical direction and a gradient in a horizontal direction for the prediction residual block as a part of the analysis information.

5. The apparatus according to any one of claims 2 to 4, wherein the analysis unit comprises a maximum residual calculation unit (305) configured to divide the prediction residual block into the sub blocks and calculate a maximum absolute value of the prediction residuals of the sub blocks as a part of the analysis information.

6. The apparatus according to any one of claims 2 to 5, wherein the second prediction unit comprises at least one of a direct current prediction mode, a vertical prediction mode, or a horizontal prediction mode as a prediction mode of the intra-frame prediction.

7. The apparatus according to any one of claims 2 to 5, wherein the second prediction unit comprises a prediction mode in which a reference block for the intra-frame prediction is generated by applying filter processing to a boundary of the first blocks,
wherein the analysis unit extracts edge information of an object image at the boundary of the first blocks based on an intermediate result of the filter processing, and uses the edge information as a part of the analysis information.

8. The apparatus according to preceding claim, wherein the control unit controls a quantization parameter used by the encoding unit in accordance with image characteristic information of the input image represented by the analysis information.

9. The apparatus according to preceding claim, wherein, for each first block, the control unit estimates, based on the analysis information, a number of the second blocks in which all quantized values become zero in a case where intra-frame prediction coding is performed, and determines the prediction mode of the intra-frame prediction in which the estimated number is maximized.

10. The apparatus according to claim 9, wherein the control unit decides a size of the first block in the first prediction unit and the encoding unit based on the estimated number and the determined prediction mode.

11. The apparatus according to claim 9 or 10, wherein the first prediction unit searches for the prediction mode to perform the intra-frame prediction based on the determined prediction mode.

12. The apparatus according to claim 9 or 10, wherein the control unit controls, based on the estimated number, whether to cause the first prediction unit searching for the prediction mode to perform the intra-frame prediction.

13. The apparatus according to claim 9 or 10, wherein in a case where the estimated number exceeds a predetermined threshold, the control unit controls the first prediction unit and the encoding unit so as to encode the DC component of a first block, that is estimated to be a block in which all the quantized values become zero, and perform the intra-frame prediction coding using the determined prediction mode on a second block that is estimated to be a block in which not all the quantized values become zero.

14. The apparatus according to any one of claims 1 to 10, further comprising a motion prediction unit (153) configured to perform motion prediction and generate the prediction residual of the first block,
wherein the control unit controls the encoding unit based on a prediction result of the motion prediction unit and the analysis information to encode the prediction residual generated by the first prediction unit or the prediction residual generated by the motion prediction unit.

15. An image encoding method of performing prediction coding of image data,
**characterized by** comprising the steps of:

dividing an input image into first blocks in a coding unit;
generating analysis information associated with intra-frame prediction of the input image for each first block;
dividing the input image into second blocks in a predictive unit;
performing the intra-frame prediction to generate a prediction residual of each second block;
encoding a DC component or the prediction residual of the second block;
estimating, for each first block, a coding result in the encoding step based on the analysis information; and
controlling the intra-frame prediction and the encoding based on the estimation.

16. A program that, when executed by an image encoding apparatus, causes the image encoding apparatus to perform a method according to claim 15.

17. A storage medium storing program code according to claim 16.

# FIG. 1

QUANTIZATION PARAMETER

IMAGE ANALYZER

**101**

ANALYSIS INFORMATION

**103**
ENCODING CONTROLLER

ENCODED CODED BLOCK PATTERN

**106**

DETERMINED PREDICTION MODE

OPERATION CONTROL

CODEC

MUX

CODED STREAM

INPUT IMAGE

**104**
INTRA-FRAME PREDICTOR

PREDICTION RESIDUAL

PREDICTION MODE

**105**

CODED DATA

LOCALLY DECODED PREDICTION RESIDUAL

INTRA-FRAME COMPENSATOR

**108** MEMORY

**107**

LOCALLY DECODED PIXEL

ENCODER

**102**

EP 2 723 082 A2

18

# F I G. 2

105

QUANTIZATION PARAMETER

CODING RESULT

PREDICTION RESIDUAL → **201** ORTHOGONAL TRANSFORMATION UNIT → **202** QUANTIZATION UNIT → **203** ENTROPY CODING UNIT → CODED DATA

DECODED PREDICTION RESIDUAL ← **205** INVERSE ORTHOGONAL TRANSFORMATION UNIT ← **204** INVERSE QUANTIZATION UNIT

EP 2 723 082 A2

FIG. 3

302 MEMORY

INPUT IMAGE

301 INTRA-FRAME PREDICTOR

303 ACTIVITY CALCULATOR — $act_{SUB}$

304 GRADIENT DETERMINER — $grad_{BLK}$

305 MAXIMUM RESIDUAL CALCULATOR — $max_{RES}$

306 MUX — ANALYSIS INFORMATION

101

EP 2 723 082 A2

F I G. 4

EP 2 723 082 A2

# F I G. 5A

pred[0, 0]   pred[15, 0]

ALL PIXELS
IN REFERENCE
BLOCK HAVE SAME VALUE
(AVERAGE VALUE OF
ADJACENT PIXELS)

pred[0, 15]   pred[15, 15]

# F I G. 5B

# F I G. 5C

# F I G. 6

$act_{SUB}[0]$   $act_{SUB}[1]$   $act_{SUB}[2]$   $act_{SUB}[3]$

$act_{SUB}[12]$   $act_{SUB}[15]$

22

# F I G. 7

EP 2 723 082 A2

**F I G. 8**

| ACTIVITY | $act_{SUM}$ | $grad_{BLK}$ | ADJUSTMENT VALUE OF QUANTIZATION PARAMETER |
|---|---|---|---|
| HIGH | $act_{th2} < act_{SUM}$ | NEGLECT | +4 |
| MEDIUM | $act_{th1} < act_{SUM} \le act_{th2}$ | $grad_{BLK} \le grad_{th1}$ (GRADIENT IS SMALL) | +2 |
| | | $grad_{th1} < grad_{BLK} \le grad_{th2}$ | 0 |
| | | $grad_{th2} < grad_{BLK}$ (GRADIENT IS LARGE) | -2 |
| LOW | $act_{SUM} \le act_{th1}$ | NEGLECT | -4 |

$act_{th1} < act_{th2}$
$grad_{th1} < grad_{th2}$

**F I G. 9**

| $act_{SUM}[i]$ / $max_{RES}[i]$ | $\le res_{qp}$ | $> res_{qp}$ |
|---|---|---|
| $\le act_{qp}$ | Not Coded | Coded |
| $> act_{qp}$ | Coded | Not Coded |

# F I G. 10A

START

ENCODING CONTROLLER INPUTS
QUANTIZATION PARAMETER OF INPUT FRAME ～S101

③

IMAGE ANALYZER ACQUIRES
16 × 16 PIXEL BLOCK FROM INPUT FRAME ～S102

IMAGE ANALYZER
PERFORMS SIMPLE INTRA-FRAME PREDICTION
AND CALCULATES PREDICTION RESIDUAL BLOCK ～S103

IMAGE ANALYZER CALCULATES ANALYSIS
INFORMATION OF PREDICTION RESIDUAL BLOCK
IN EACH PREDICTION MODE AND
TRANSFERS IT TO ENCODING CONTROLLER ～S104

ENCODING CONTROLLER TO PERFORMS
ADAPTIVE QUANTIZATION CONTROL USING
ANALYSIS INFORMATION OF DC PREDICTION ～S105

ENCODING CONTROLLER DETERMINES
PREDICTION MODE IN WHICH NUMBER $N_{NC}$ OF
SUB BLOCKS TO BE ESTIMATED AS "Not Coded" IS MAXIMUM ～S106

INTRA-FRAME PREDICTOR ACQUIRES
16 × 16 PIXEL BLOCK FROM INPUT FRAME ～S107

①

# F I G. 10B

(1)

**S108**

$N_{NC} > N_{th}$?  —  YES

NO

INTRA-FRAME PREDICTOR DECIDES
PREDICTION MODE OF 4 × 4 PIXEL SUB BLOCK  **S109**

PERFORM PREDICTION CODING AND
LOCAL DECODING OF 4 × 4 PIXEL SUB BLOCK  **S110**

**S111**

NO  —  PROCESSING OF
ALL SUB BLOCK COMPLETED
?

YES

**S112**

Coded  —  SUB BLOCK?  —  Not Coded

**S113**

PERFORM PREDICTION CODING
AND LOCAL DECODING OF
SUB BLOCK OF INTEREST

**S114**

PERFORM CODING AND LOCAL DECODING OF
ONLY DC COEFFICIENTS OF
SUB BLOCK OF INTEREST

**S115**

PROCESSING OF
ALL SUB BLOCK COMPLETED
?  —  NO

YES

(2)

# F I G. 10C

②

S121 — ENCODING CONTROLLER
GENERATES CODED BLOCK PATTERN

S122 — CAUSE ENCODING CONTROLLER
TRANSFERS ENCODED CODED BLOCK PATTERN
AND PREDICTION MODE
TO MUX AS HEADER INFORMATION

S123 — MUX MULTIPLEXES HEADER
INFORMATION ON CODED STREAM

S124 — ENCODING PROCESS OF
INPUT FRAME COMPLETED?

NO

③

YES

END

F I G. 11

```
        ┌─────────────┐
        │    START    │
        └─────────────┘
               │
               ▼
┌──────────────────────────────────────┐
│     CALCULATE PREDICTION RESIDUAL     │──S131
└──────────────────────────────────────┘
               │
               ▼
┌──────────────────────────────────────┐
│   PERFORM ORTHOGONAL TRANSFORMATION OF│──S132
│         PREDICTION RESIDUAL           │
└──────────────────────────────────────┘
               │
               ▼
┌──────────────────────────────────────┐
│ QUANTIZE ORTHOGONAL TRANSFORMATION    │──S133
│              COEFFICIENT              │
└──────────────────────────────────────┘
               │
               ▼
┌──────────────────────────────────────┐
│     ENTROPY-ENCODE QUANTIZED VALUE    │──S134
└──────────────────────────────────────┘
               │
               ▼
┌──────────────────────────────────────┐
│     INVERSELY QUANTIZE QUANTIZED VALUE│──S135
└──────────────────────────────────────┘
               │
               ▼
┌──────────────────────────────────────┐
│ PERFORM INVERSE ORTHOGONAL TRANSFORMA-│
│ TION OF ORTHOGONAL TRANSFORMATION     │──S136
│ COEFFICIENT OBTAINED BY INVERSE       │
│ QUANTIZATION TO GENERATE              │
│ DECODED PREDICTION RESIDUAL           │
└──────────────────────────────────────┘
               │
               ▼
┌──────────────────────────────────────┐
│ TRANSFER CODING RESULT TO ENCODING    │──S137
│            CONTROLLER                 │
└──────────────────────────────────────┘
               │
               ▼
┌──────────────────────────────────────┐
│  MULTIPLEX CODED DATA ON CODED STREAM │──S138
└──────────────────────────────────────┘
               │
               ▼
┌──────────────────────────────────────┐
│    GENERATE LOCALLY DECODED PIXEL     │──S139
└──────────────────────────────────────┘
               │
               ▼
        ┌─────────────┐
        │     END     │
        └─────────────┘
```

# FIG. 12A

16 PIXELS

16 PIXELS

PREDICTION MODE IS
DC PREDICTION
AND
ALL SUB BLOCKS ARE
Not Coded

# FIG. 12B

16 PIXELS

16 PIXELS

PREDICTION MODE IS
DC PREDICTION
AND
Not Coded

# FIG. 12C

32 PIXELS

32 PIXELS

PREDICTION MODE IS
DC PREDICTION
AND
Not Coded

EP 2 723 082 A2

# F I G. 13

BLOCK C

BLOCK B

p[0, -1]

p[15, -1]

pred[x, 0]

p[-1, 0]

BLOCK A

BLOCK X

p[-1, 15]

pred[0, y]

# FIG. 14

EP 2 723 082 A2

F I G. 15

# F I G. 16A

START

| ENCODING CONTROLLER INPUTS QUANTIZATION PARAMETER OF INPUT FRAME | S101 |

C

| IMAGE ANALYZER ACQUIRES 16 × 16 PIXEL BLOCK FROM INPUT FRAME | S102 |

| IMAGE ANALYZER PERFORMS SIMPLE INTRA-FRAME PREDICTION AND CALCULATES PREDICTION RESIDUAL BLOCK | S103 |

| IMAGE ANALYZER CALCULATES ANALYSIS INFORMATION OF PREDICTION RESIDUAL BLOCK IN EACH PREDICTION MODE AND TRANSFERS IT TO ENCODING CONTROLLER | S104 |

| ENCODING CONTROLLER PERFORMS ADAPTIVE QUANTIZATION CONTROL USING ANALYSIS INFORMATION OF DC PREDICTION | S105 |

| ENCODING CONTROLLER DETERMINES PREDICTION MODE IN WHICH NUMBER $N_{NC}$ OF SUB BLOCKS TO BE ESTIMATED AS "Not Coded" IS MAXIMUM | S106 |

| INTRA-FRAME PREDICTOR AND MOTION PREDICTOR ACQUIRE 16 × 16 PIXEL BLOCK FROM INPUT FRAME | S151 |

A

# F I G. 16B

A

**S152**

$N_{NC} > N_{th}$? — YES → E

NO

| MOTION PREDICTOR CALCULATES<br>MINIMUM ACTIVITY OF 16 × 16 PIXEL BLOCK | **S153** |

**S154**

CODING<br>METHOD TO BE DECIDED<br>BY COMPARISON OF MINIMUM<br>ACTIVITIES<br>? → D

INTRA-FRAME<br>PREDICTION CODING

INTER-FRAME PREDICTION CODING

| MOTION PREDICTOR DECIDES<br>MOTION VECTOR OF SUB BLOCK | **S155** |

| PERFORM PREDICTION CODING AND<br>LOCAL DECODING OF 4 × 4 PIXEL SUB BLOCK | **S156** |

**S157**

NO — PROCESSING OF<br>ALL SUB BLOCK COMPLETED<br>?

YES

B

F I G. 16C

(D)

**S109**

INTRA-FRAME PREDICTOR
DECIDES PREDICTION MODE OF
4 × 4 PIXEL SUB BLOCK

**S110**

PERFORM PREDICTION CODING
AND LOCAL DECODING OF
4 × 4 PIXEL SUB BLOCK

**S111**

PROCESSING OF
ALL SUB BLOCK COMPLETED
?

NO

YES

(E)

**S161**

SUB BLOCK?

Not Coded

Coded

**S114**

PERFORM CODING AND
LOCAL DECODING OF
ONLY DC COEFFICIENT OF
SUB BLOCK OF INTEREST

**S113**

PERFORM PREDICTION CODING
AND LOCAL DECODING OF
SUB BLOCK OF INTEREST

**S162**

PROCESSING OF
ALL SUB BLOCK COMPLETED
?

NO

YES

(B)

# F I G. 16D

B

S163 — | PERFORM POST FILTER PROCESSING |

S121 — | ENCODING CONTROLLER GENERATES<br>CODED BLOCK PATTERN |

S122 — | ENCODING CONTROLLER<br>TRANSFERS ENCODED CODED BLOCK PATTERN<br>AND PREDICTION MODE<br>TO MUX AS HEADER INFORMATION |

S123 — | MUX MULTIPLEXES HEADER<br>INFORMATION ON CODED STREAM |

S124 — ENCODING PROCESS OF<br>INPUT FRAME COMPLETED<br>?

NO

C

YES

END

FIG. 17

START

TRANSFER ENCODED MOTION VECTOR TO MUX — S201

CALCULATE PREDICTION RESIDUAL — S202

PERFORM ORTHOGONAL TRANSFORMATION OF PREDICTION RESIDUAL — S132

QUANTIZE ORTHOGONAL TRANSFORMATION COEFFICIENT — S133

ENTROPY-ENCODE QUANTIZED VALUE — S134

INVERSELY QUANTIZE QUANTIZED VALUE — S135

PERFORM INVERSE ORTHOGONAL TRANSFORMATION OF ORTHOGONAL TRANSFORMATION COEFFICIENT OBTAINED BY INVERSE QUANTIZATION TO GENERATE DECODED PREDICTION RESIDUAL — S136

TRANSFER CODING RESULT TO ENCODING CONTROLLER — S137

MULTIPLEX CODED MOTION VECTOR AND CODED DATA ON CODED STREAM — S203

GENERATE LOCALLY DECODED PIXEL — S204

END

**EP 2 723 082 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008154060 A